# FASCICULE DE BREVET EUROPEEN

(11) **EP 4 007 694 B1**
(45) Date de publication et mention de la délivrance du brevet: **30.08.2023**
(21) Numéro de dépôt: 20756929.4
(22) Date de dépôt: 28.07.2020
(51) Int. Cl.: B29D 30/24, B29D 30/32

(54) **TAMBOUR EXPANSIBLE POUR LA CONFORMATION DE BANDAGES PNEUMATIQUES COMPRENANT UN DISPOSITIF EXTENSEUR A PARALLÉLOGRAMME POUR LE MAINTIEN DE LA TRINGLE**
EXPANDIERBARE TROMMEL ZUR FORMUNG VON LUFTREIFEN MIT EINER PARALLELOGRAMMARTIGEN EXPANDERVORRICHTUNG ZUM HALTEN DES WULSTDRAHTS
EXPANDABLE DRUM FOR SHAPING PNEUMATIC TYRES THAT COMPRISES A PARALLELOGRAM-TYPE EXPANDER DEVICE FOR RETAINING THE BEAD WIRE

(30) Priorité: 01.08.2019 FR 1908823
(43) Date de publication de la demande: 08.06.2022
(73) Titulaire: Compagnie Générale des Etablissements Michelin, 63000 Clermont-Ferrand (FR)
(72) Inventeur: TORRES-CASTELLANO, Miguel, 63040 CLERMONT-FERRAND Cedex 9 (FR)
(74) Mandataire: Redouté, Gilles Pierre
(86) Numéro de dépôt international: PCT/FR2020/051388
(87) Numéro de publication internationale: WO 2021/019183

(56) Documents cités:
- WO-A2-2005/118270
- CN-A- 109 624 367
- US-A- 4 685 992

## Description

La présente invention concerne la fabrication des bandages pneumatiques, notamment des bandages pneumatiques pour véhicules poids-lourd, et plus particulièrement le domaine des tambours d'expansion qui sont conçus pour conformer la carcasse du bandage pneumatique.

Généralement, la carcasse du pneumatique est réalisée « à plat », c'est-à-dire en disposant ses différents constituants sur la surface cylindrique de base circulaire d'un tambour. On engage ensuite sur cette carcasse des tringles, c'est-à-dire des cerclages de renfort, généralement métalliques, qui sont destinés à être intégrés à la structure de la zone basse du bandage pneumatique afin de permettre l'accroche et la tenue dudit bandage pneumatique sur une jante.

Pour conformer ensuite la carcasse, de manière à conférer à ladite carcasse une forme bombée, sensiblement torique, le tambour réalise une expansion de la partie centrale de la carcasse, par gonflage ou par déploiement radial de plaques dites « tuiles d'expansion », et rapproche axialement l'une de l'autre les tringles du bandage.

Le tambour est également conçu pour maintenir la carcasse pendant que l'on solidarise avec la carcasse ainsi conformée un bloc sommet, qui comprend notamment la bande de roulement ainsi qu'une ou plusieurs nappes de renfort, et que l'on procède à un rouletage pour chasser l'air et assurer une cohésion parfaite entre ledit bloc sommet et la carcasse.

Afin de maintenir fermement les tringles pendant ces opérations de conformation de la carcasse puis de rouletage, il est connu de faire appel à des dispositifs de serrage radial qui comprennent une pluralité de mors de serrage, lesquels mors sont répartis autour de l'axe central du tambour et montés radialement mobiles entre une position rétractée, proche de l'axe, qui permet de mettre en place la tringle, lâche, sur le tambour, et une position déployée dans laquelle lesdits mors viennent en prise sur le diamètre intérieur de ladite tringle pour exercer un effort de serrage centrifuge sur ladite tringle.

Pour réaliser le déploiement radial des mors de serrage, il est notamment connu, par exemple par le document WO-2005/118270, d'utiliser des coins qui présentent une surface d'appui, dite « pente », qui est inclinée par rapport à l'axe central, laquelle pente coopère avec une pente conjuguée ménagée sur le mors concerné. En déplaçant ces coins en translation parallèlement à l'axe central du tambour, par exemple au moyen d'un vérin pneumatique, on peut ainsi écarter progressivement les mors de l'axe central.

Malgré leur indéniable robustesse, de tels systèmes de déploiement peuvent toutefois présenter certains inconvénients.

En effet, de tels systèmes de déploiement à coins sont relativement encombrants, et doivent être placés axialement à proximité immédiate des mors, au plus près de la zone dite « zone centrale » du tambour, qui est comprise axialement entre les deux tringles et occupée par la carcasse que l'on souhaite déployer.

Or, l'espace disponible est rare dans ladite zone centrale, qui doit également accueillir l'ensemble de plaques, dites « tuiles d'expansion », qui sont réparties sur la circonférence du tambour et qui sont destinées à être déployées radialement, à l'encontre de la surface radialement interne de la carcasse, afin de repousser ladite surface radialement interne de la carcasse pour conformer cette dernière.

Il est d'autant plus difficile de concilier ces impératifs liés à l'encombrement des différents systèmes équipant le tambour qu'il est nécessaire de conférer des dimensions relativement importantes aux organes constitutifs du système de déploiement, de manière à ce que ledit système de déploiement soit capable de générer et de supporter d'importants efforts axiaux, et de convertir ces efforts axiaux en un effort radial centrifuge qui soit d'une intensité suffisamment élevée pour empêcher, notamment lorsque la carcasse subit l'opération de rouletage, un glissement des éléments constitutifs de ladite carcasse qui sont situés, et donc comprimés, entre le mors et la tringle, tel que cela est notamment le cas de la nappe carcasse.

En outre, en cas de relâchement de la pression qui alimente les vérins actionnant les coins, certains systèmes de déploiement connus peuvent s'affaisser, ce qui peut être préjudiciable au processus de fabrication du bandage pneumatique, ainsi qu'à la sécurité de l'opérateur, en particulier lorsque l'on réalise des bandages pneumatiques qui présentent de grandes dimensions, tels que des bandages destinés aux poids-lourds ou aux engins de génie civil, et qui intègrent donc des tringles particulièrement grandes et lourdes.

Ensuite, malgré la présence d'une pente, voire de plusieurs pentes successives présentant des inclinaisons différentes, il est parfois difficile de maîtriser l'intensité et la progressivité de l'effort de déploiement que l'on exerce au moyen des coins à l'encontre de la tringle et de la nappe carcasse sous-jacente, ce qui peut compliquer le pilotage du tambour.

Enfin, pour limiter l'usure des coins et préserver la qualité et la précision du système de déploiement, il est nécessaire de prendre des dispositions spécifiques en ce qui concerne les états de surface des pentes, et de prévoir une lubrification adaptée.

Les objets assignés à l'invention visent par conséquent à remédier aux inconvénients susmentionnés et à proposer un nouveau tambour expansible qui présente un dispositif de serrage qui soit peu encombrant, performant, simple et sûr.

Les objets assignés à l'invention sont atteints au moyen d'un tambour destiné à la fabrication d'un bandage pneumatique comprenant au moins une tringle annulaire, ledit tambour présentant un axe central Z1 et étant pourvu d'un dispositif de serrage qui comprend un fût engagé sur l'axe central Z1, ledit fût portant une pluralité de mors de serrage qui sont répartis en plusieurs secteurs angulaires autour dudit axe central Z1 et qui sont placés sous le contrôle d'un système de déploiement qui permet de modifier la distance radiale desdits mors de serrage par rapport à l'axe central Z1, de sorte que lesdits mors de serrage définissent un siège expansible que le système de déploiement permet de faire passer alternativement d'une configuration rétractée, dans laquelle ledit siège expansible occupe un premier diamètre dit « diamètre de repos » qui est inférieur au diamètre intérieur de la tringle, à une configuration déployée, dans laquelle les mors de serrage se trouvent radialement plus éloignés de l'axe central Z1 qu'en configuration rétractée de sorte que le siège expansible s'étend sur un second diamètre dit « diamètre de serrage » qui est supérieur au diamètre de repos et qui permet audit siège expansible de venir en prise contre le diamètre intérieur de la tringle et d'exercer un effort de serrage centrifuge à l'encontre de ladite tringle, ledit tambour étant caractérisé en ce que le système de déploiement comprend un parallélogramme articulé dont les quatre sommets forment respectivement un premier, un second, un troisième et un quatrième pivot, le premier pivot et le second pivot étant solidaires du fût et positionnés respectivement à une première distance radiale de l'axe central Z1 et à une seconde distance radiale de l'axe central Z1, supérieure à la première distance radiale, de sorte à définir une première base dite « base fixe » du parallélogramme articulé qui s'étend transversalement à l'axe central Z1, tandis que le troisième pivot et le quatrième pivot sont solidaires d'un mors de serrage, et définissent une seconde base dite « base mobile » du parallélogramme articulé, qui est maintenue parallèle à la base fixe par un premier bras qui relie le premier pivot au troisième pivot de sorte à définir un premier côté du parallélogramme articulé, et par un second bras qui relie le second pivot au quatrième pivot de sorte à définir un second côté du parallélogramme articulé, parallèle au premier côté, et en ce que le système de déploiement comprend un mécanisme d'entraînement agencé pour coopérer avec le parallélogramme articulé de manière à pouvoir sélectionner et modifier la position radiale de la base mobile par rapport à la base fixe afin de passer de la configuration rétractée à la configuration déployée et inversement.

Avantageusement, l'utilisation d'une structure à parallélogramme articulé permet, grâce à la longueur des premier bras et second bras, de déporter une partie du système de déploiement, et plus particulièrement la base fixe du parallélogramme et la portion du fût qui soutient ladite base fixe et en assure l'ancrage, à distance axiale de la zone centrale du tambour.

L'invention permet donc avantageusement de libérer de l'espace dans ladite zone centrale, tout en procurant au système de déploiement, à distance de ladite zone centrale, un ancrage solide qui assure notamment une bonne reprise des efforts axiaux qui s'exercent au sein dudit système de déploiement.

En outre, une telle structure articulée réduit les risques de grippage, et limite les besoins en matière de lubrification ou de finition des surfaces des organes mobiles concernés.

De surcroît, comme on le verra par la suite, l'utilisation d'un parallélogramme articulé permet la mise en place d'un mécanisme d'entraînement particulièrement progressif et puissant, qui permet d'exercer sur la tringle un effort radial centrifuge de forte intensité, mais finement maîtrisé.

De même, cette géométrie en parallélogramme est propice à la mise en place d'un mécanisme anti-retour simple, qui garantit l'absence d'affaissement inopiné du système de déploiement et du siège en cas d'interruption ou de défaillance de l'alimentation en énergie dudit système de déploiement.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue en coupe dans un plan sagittal contenant l'axe central du tambour, une portion de tambour selon l'invention en configuration rétractée, et le bandage pneumatique en cours de fabrication.
La figure 2 illustre, selon une vue en coupe réalisée dans le même plan sagittal de coupe que la figure 1, le tambour de la figure 1 placé en configuration déployée pour assurer le serrage centrifuge des tringles du bandage pneumatique.
La figure 3 est une vue de détail en coupe axiale du système de déploiement du tambour de la figure 1, en configuration rétractée.
La figure 4 est une vue de détail en coupe axiale du système de déploiement du tambour de la figure 2, en configuration déployée.
La figure 5 illustre, selon une vue de détail en perspective, un exemple de réalisation de bras du parallélogramme articulé, ledit bras présentant une structure à deux longerons reliés entre eux par des traverses.

La présente invention concerne un tambour 1 destiné à la fabrication d'un bandage 2. Ledit bandage 2 est de préférence un bandage 2 pneumatique, et pourra être assimilé à un bandage pneumatique dans ce qui suit.

De façon connue en soi, un tel bandage 2 comprend au moins une tringle 3 annulaire.

Une telle tringle 3 est destinée à renforcer la partie dite « zone basse » du bandage 2, qui permet l'accrochage du bandage à une jante.

La tringle 3 forme un anneau circulaire, qui est fermé sur lui-même autour d'un axe central, dit « axe central de tringle » Z3.

On notera D3_in le diamètre intérieur de la tringle 3 au repos, en l'absence de contraintes extérieures qui tendraient à déformer ladite tringle par ovalisation, vrillage, extension circonférentielle, etc.

On pourra par ailleurs désigner par « ligne moyenne » L3 la ligne courbe et fermée sur elle-même, ici de préférence une ligne circulaire, qui est constituée par l'ensemble des centres des sections droites de la tringle 3 considérées le long de ladite tringle 3, autour de l'axe central Z3 de ladite tringle.

La tringle 3 est, de façon connue en soi, de préférence formée à partir d'un ou plusieurs fils, constitués d'un matériau choisi pour sa résistance mécanique, par exemple un matériau métallique ou un matériau composite.

Le ou les fils peuvent éventuellement être revêtus de gomme, individuellement ou dans leur ensemble.

Selon une possibilité de réalisation, les fils constitutifs de la tringle 3 peuvent s'enrouler en hélice autour de la ligne moyenne L3, de sorte à être entrelacés pour former un tore tressé, centré sur l'axe central de tringle Z3.

Selon une autre possibilité de réalisation, les fils pourront être agencés en spires jointives juxtaposées, normales à l'axe central de la tringle Z3, et qui forment chacune une boucle autour dudit axe central Z3, et présentent de ce fait chacune un diamètre égal ou supérieur au diamètre intérieur D3_in de la tringle 3.

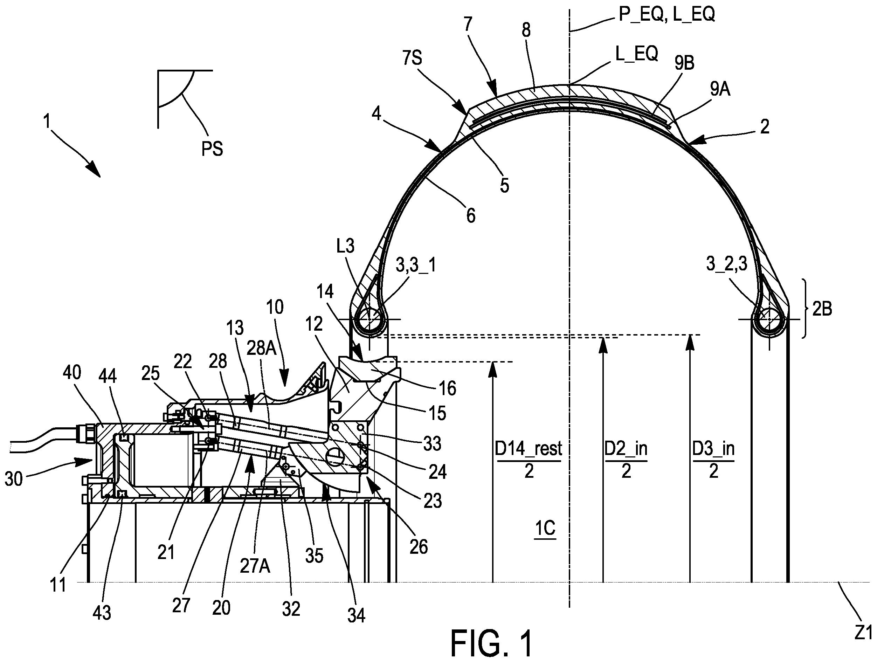

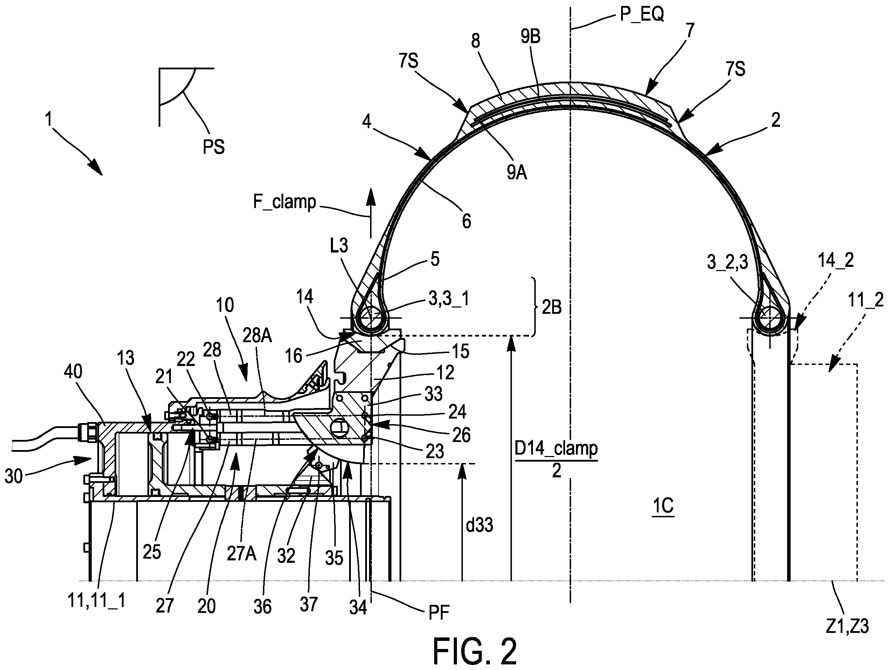

De préférence, tel que cela est visible sur les figures 1 et 2, le bandage 2 comprend deux tringles 3 annulaires, à savoir une première tringle 3_1, et une seconde tringle 3_2, qui sont disposées de part et d'autre du plan équatorial P_EQ dudit bandage 2.

Par convention, on désignera comme « zone centrale » 1C du tambour 1 la région de l'espace comprise axialement, le long de l'axe central Z1 du tambour, entre la première tringle 3_1 et la seconde tringle 3_2, et qui contient donc, entre autres, le plan équatorial P_EQ du bandage.

De façon connue en soi, le bandage 2 comprend également une carcasse 4.

Ladite carcasse 4 comprend, de façon connue en soi, et tel que cela est visible sur les figures 1 et 2, une nappe carcasse 5 qui s'étend de la première tringle 3_1 à la seconde tringle 3_2.

En outre, la face radialement interne de la nappe carcasse 5 est de préférence recouverte d'une couche de gomme, dite gomme intérieure 6, qui est étanche au fluide, typiquement de l'air, utilisé pour le gonflage du bandage 2 pneumatique.

Le bandage 2 comprend également un bloc sommet 7, lequel comporte une bande de roulement 8 ainsi que des nappes de renfort 9A, 9B, pourvues de fils de renforts parallèles entre eux.

Typiquement, le bandage 2 pourra comprendre une superposition d'au moins deux nappes de renfort 9A, 9B dites « croisées », c'est-à-dire que les fils de renfort de la première nappe de renfort 9A sont disposés, par rapport à la ligne équatoriale L_EQ du bandage 2, selon un angle, dit « angle de première nappe » qui possède un signe opposé au signe de l'angle, dit « angle de seconde nappe », que forment les fils de renfort de la seconde nappe de renfort 9B par rapport à cette même ligne équatoriale L_EQ, si bien que les fils de la première nappe de renfort 9A croisent les fils de la seconde nappe de renfort 9B.

Le tambour 1 présente, tel que cela est visible sur les figures 1 à 4, un axe central Z1.

Ledit axe central Z1 est de préférence horizontal, notamment pour faciliter la mise en place des organes constitutifs du bandage 2 et la manipulation dudit bandage 2, et pour éviter, pendant l'opération de conformation du bandage 2, des biais de comportement en déformation du bandage 2 qui seraient liés à la force de gravité.

Le tambour 1 est également pourvu d'un dispositif de serrage 10.

Ce dispositif de serrage 10 permet de tenir fermement la tringle 3, et la nappe carcasse 5 radialement sous-jacente, dans la position voulue pendant la conformation de la carcasse 4 puis pendant l'opération de fixation du bloc sommet 7 sur ladite carcasse 4.

Ladite étape de fixation du bloc sommet 7 sur la carcasse 4 comprend de préférence une opération de rouletage, au cours de laquelle on presse au moyen d'un rouleau le bloc sommet 7, notamment les épaules 7S dudit bloc sommet, à l'encontre de la carcasse 4, depuis l'extérieur du bandage 2, pour parfaire la cohésion du bandage 2.

Le dispositif de serrage 10 comprend un fût 11, de préférence cylindrique, et plus préférentiellement cylindrique de base circulaire, qui est engagé sur l'axe central Z1 du tambour, et plus préférentiellement centré sur ledit axe central Z1.

Tel que cela est illustré sur les figures 1 à 4, ledit fût 11 porte une pluralité de mors de serrage 12 qui sont répartis en plusieurs secteurs angulaires autour de l'axe central Z1 et qui sont placés sous le contrôle d'un système de déploiement 13 qui permet de modifier la distance radiale desdits mors de serrage 12 par rapport à l'axe central Z1.

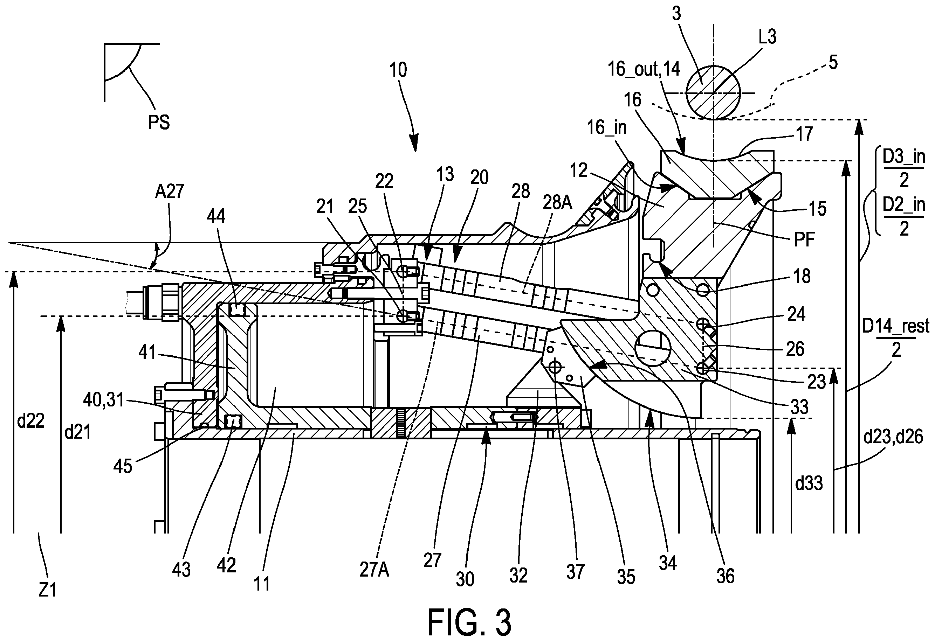

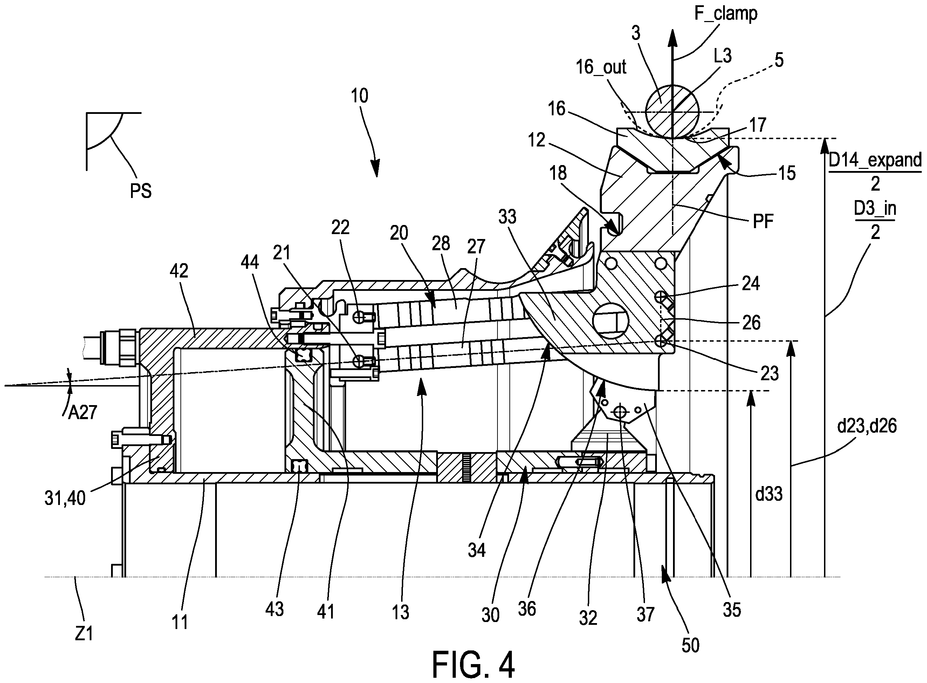

De la sorte, lesdits mors de serrage 12 définissent un siège 14 expansible que le système de déploiement 13 permet de faire passer alternativement d'une configuration rétractée, dans laquelle ledit siège 14 expansible occupe un premier diamètre dit « diamètre de repos » D14_rest qui est inférieur au diamètre intérieur D3_in de la tringle 3, tel que cela est illustré sur les figures 1 et 3, à une configuration déployée, dans laquelle les mors de serrage 12 se trouvent radialement plus éloignés de l'axe central Z1 qu'en configuration rétractée de sorte que le siège 14 expansible s'étend sur un second diamètre dit « diamètre de serrage » D14_clamp qui est supérieur au diamètre de repos D14_rest et qui permet audit siège 14 expansible de venir en prise contre le diamètre intérieur D3_in de la tringle 3 et d'exercer un effort de serrage F_clamp centrifuge à l'encontre de ladite tringle 3, tel que cela est illustré sur les figures 2 et 4.

Bien entendu, le système de déploiement 13 sera agencé de manière à pouvoir, réciproquement, faire revenir le siège 14 de sa configuration déployée à sa configuration rétractée, notamment pour permettre à l'opérateur d'extraire du tambour 1 le bandage 2, de préférence un bandage 2 cru (c'est-à-dire non vulcanisé), obtenu après conformation et rouletage, afin par exemple de pouvoir transférer ensuite ledit bandage 2 cru dans un moule de cuisson.

Par commodité de description, on pourra faire référence à la configuration rétractée et à la configuration déployée aussi bien pour le tambour 1 dans son ensemble que pour tout ou partie des éléments dudit tambour 1 qui sont concernés par les changements de configuration, parmi lesquels notamment le siège expansible 14, les mors de serrage 12, ou tout ou partie du système de déploiement 13.

Le diamètre de repos D14_rest que le siège 14 adopte en configuration rétractée est choisi suffisamment inférieur au diamètre intérieur D3_in de la tringle 3 tout d'abord pour permettre à un opérateur (que cet opérateur soit du reste un robot automatisé ou bien encore un humain, éventuellement assisté par des moyens mécaniques de manutention) d'engager axialement la tringle 3 sur le tambour 1, jusqu'à amener ladite tringle 3, lâche, dans la position axiale voulue, par rapport à la nappe carcasse 5, le long de l'axe central Z1, avant l'opération de conformation de la carcasse 4, puis pour relâcher la tringle 3 et plus globalement le bandage 2, après les opérations de conformation de la carcasse 4 et de fixation du bloc sommet 7, pour permettre à l'opérateur d'extraire le bandage 2 conformé du tambour 1.

En pratique, le diamètre de repos D14_rest du siège 14 sera donc strictement inférieur au diamètre intérieur du bandage 2 au repos D2_in, c'est-à-dire au diamètre de l'espace vide cylindrique qui est situé au centre du bandage 2 et qui est délimité radialement par ledit bandage 2, et cerclé par la tringle 3, à la position axiale de la tringle 3 considérée.

Géométriquement, le diamètre intérieur du bandage D2_in correspondra au diamètre de la section de passage libre dont la circonférence est délimitée par le bandage 2, autour de l'axe central Z1, tel que ce diamètre D2_in est considéré dans un plan normal à l'axe central Z1 et contenant la ligne moyenne L3 de la tringle 3 considérée. En pratique, le diamètre intérieur D2_in du bandage correspond de préférence à la section de passage la plus étroite dudit bandage 2.

On notera donc que, en toute rigueur, et tel que cela est visible sur la figure 1, le diamètre intérieur du bandage D2_in est strictement inférieur au diamètre intérieur D3_in de la tringle 3, considéré au repos en l'absence d'élongation en traction de ladite tringle 3, dans la mesure où ledit diamètre intérieur du bandage D2_in dépend également de l'épaisseur radiale de la ou des couches intermédiaires constitutives de la zone basse 2B dudit bandage 2, qui sont disposées radialement sous la tringle 3, entre la tringle 3 et l'axe central Z1, et qui incluent notamment la couche formée par la nappe carcasse 5, ainsi que le cas échéant une ou des épaisseurs de gomme formant un bourrelet protecteur autour de la section de la tringle 3.

Cependant, par simple commodité de description, et compte tenu de la relative faiblesse de l'épaisseur de ces couches intermédiaires au regard du diamètre intérieur D3_in de la tringle 3, on pourra en première approximation assimiler dans ce qui suit le diamètre intérieur D2_in du bandage 2 au diamètre intérieur de la tringle D3_in.

On notera par ailleurs que, en configuration déployée, l'axe central Z3 de la tringle 3 coïncide de préférence avec axe l'axe central Z1 du tambour 1.

En configuration déployée, le diamètre de serrage D14_clamp du siège 14 sera bien entendu choisi pour générer, à l'encontre de la tringle 3, un effort de serrage F_clamp suffisant pour bloquer la tringle 3 par rapport audit siège 14, et notamment pour empêcher ladite tringle 3, ainsi que la nappe carcasse 5 sous-jacente, de glisser par rapport audit siège 14 le long de l'axe central Z1, lors des opérations de conformation de carcasse 4 puis de fixation du bloc sommet 7, et plus particulièrement lors de l'opération de rouletage.

On notera à ce titre que, du fait de sa raideur intrinsèque, la tringle 3 peut être considérée comme sensiblement inextensible en traction circonférentielle le long de sa ligne moyenne L3. Il est donc possible de générer un effort de serrage centrifuge F_clamp très élevé sans pour autant devoir étendre la circonférence de la tringle 3 qui conserve donc quasiment, lorsqu'elle est soumise à l'effort de serrage F_clamp, le même diamètre intérieur que le diamètre D3_in qu'elle occupait au repos.

En pratique, le diamètre de serrage D14_clamp du siège 14 en configuration déployée est de préférence sensiblement égal au diamètre intérieur D3_in de la tringle au repos, en tenant compte le cas échéant d'une part des épaisseurs intercalaires de gomme et de la nappe carcasse 5 qui sont situées radialement entre la tringle 3 et le siège 14, et d'autre part du degré de compression élastique de ces épaisseurs sous l'effort de serrage F_clamp.

Pour les raisons déjà évoquées plus haut, on pourra donc considérer que l'on peut assimiler, par commodité de description, le diamètre de serrage D14_clamp au diamètre intérieur de la tringle D3_in.

Bien entendu, compte-tenu de la répartition azimutale des mors de serrage 12 autour de l'axe central Z1, l'effort de serrage F _clamp exercé à l'encontre de la tringle 3 par le siège 14 en configuration déployée se répartit avantageusement de part et d'autre de l'axe central Z1, sur la circonférence intérieure de la tringle 3.

En d'autres termes, l'effort de serrage F_clamp est multidirectionnel, en ceci qu'il s'exerce de façon centrifuge selon une pluralité de directions radiales qui sont réparties, en azimut autour de l'axe central Z1, au sein d'un secteur angulaire qui couvre globalement plus de 180 degrés autour dudit axe central Z1.

Ainsi, dans chaque direction radiale considérée en azimut autour de l'axe central Z1, l'effort de serrage F_clamp résultera en une première composante d'effort orientée dans un premier sens, qui agit sur un premier secteur de la tringle 3, et une seconde composante de signe opposé, qui agit sur un second secteur de la tringle 3 diamétralement opposé au premier secteur par rapport à l'axe central de la tringle Z3, et qui équilibre ainsi la première composante de sorte à maintenir la tringle 3 en position radiale constante par rapport à l'axe central Z1 du tambour 1.

Un tel effort de serrage F_clamp centrifuge, multidirectionnel, procure avantageusement, en configuration déployée, un serrage équilibré et relativement homogène, ainsi qu'un effet d'auto-centrage de la tringle 3 sur l'axe central Z1 du tambour 1.

Le maintien de la tringle 3 sur le siège 14, et plus globalement par rapport au tambour 1, est donc particulièrement solide et stable, aussi bien axialement que radialement.

De préférence, les mors de serrage 12 seront équi-répartis autour de l'axe central Z1, sur la circonférence du fût 11, de telle sorte que le dispositif de serrage 10 présentera une invariance par rotation d'ordre N autour de l'axe central Z1, N étant le nombre entier de mors de serrage 12.

De préférence, les mors de serrage 12 sont pourvus, sur leur face radialement externe, tel que cela est visible sur les figures 1 à 4, d'un logement circonférentiel 15, préférentiellement sous forme d'une rainure en V.

De préférence, ce logement circonférentiel 15 définit le siège 14 qui permet de recevoir la tringle 3.

La forme en creux du logement circonférentiel 15 procure avantageusement un maintien stable, tant radialement qu'axialement, le la tringle 3 au sein du ou des mors de serrage 12 concernés.

De préférence, un bandeau de cerclage 16, en matériau élastomère vient prendre place dans le logement circonférentiel 15 des mors de serrage 12.

Le bandeau de cerclage 16 repose contre chaque mors de serrage 12 par sa face radialement interne 16_in, tandis que la face radialement externe 16_out dudit bandeau de cerclage 16 forme alors le siège 14 contre lequel viennent reposer le bandage 2 et la tringle 3.

Ledit bandeau de cerclage 16 forme avantageusement un cerclage annulaire continu et fermé autour de l'axe central Z1.

Le bandeau de cerclage 16 crée ainsi des ponts qui assurent une continuité du siège 14 sur le périmètre externe de chaque mors de serrage 12 et entre les mors de serrage 12, ce qui permet de lisser la circonférence du siège 14 en dépit du fractionnement angulaire des mors de serrage 12. Le siège 14 offre ainsi, en configuration déployée, un support annulaire continu au bandage 2 et à la tringle 3.

Le passage en configuration déployée permet à la surface radialement externe 16_out du bandeau de cerclage, et donc plus globalement au siège 14, de venir épouser l'intérieur de la tringle 3 sur tout le périmètre de ladite tringle 3. Réciproquement, en configuration déployée, la tringle 3 repose donc sur toute la circonférence dudit siège 14.

Avantageusement, le bandeau de cerclage 16 peut, grâce à son élasticité intrinsèque, accommoder élastiquement, par extension circonférentielle et donc par adaptation de son diamètre, les variations du diamètre D14 du siège 14 lors du passage de la configuration rétractée à la configuration déployée, et inversement.

En outre, cette élasticité du bandeau de cerclage 16 permet, à la manière d'un coussin, d'ajuster et d'homogénéiser l'effort de compression radiale centrifuge que le siège 14 exerce à l'encontre de la tringle 3 et des couches intermédiaires, notamment de la nappe carcasse 5, ce qui assure un maintien relativement souple de la tringle 3 et plus globalement du bandage 2, et évite donc de causer un endommagement localisé du bandage 2 par une trop forte concentration de contraintes.

Par ailleurs, la contrainte élastique, de type constriction centripète, qu'exerce le bandeau de cerclage 16 à l'encontre des mors de serrage 12 procure avantageusement un effet de cohésion et d'auto-centrage des mors de serrage 12 dans leur ensemble par rapport à l'axe central Z1, et génère en outre un effort de rappel qui facilite le retour desdits mors de serrage 12, et du système de déploiement 13, de la configuration déployée à la configuration rétractée.

Selon une variante de réalisation, qui peut notamment être mise en oeuvre si le tambour 1 ne comporte pas de bandeau de cerclage 16, on pourra prévoir, pour exercer un effort d'auto centrage et de rappel de chaque mors de serrage 12 vers la configuration rétractée, un ressort annulaire de rappel, qui pourra par exemple venir se loger dans une gorge d'accroche 18 annulaire, ménagée dans ledit mors de serrage 12, centrée sur l'axe central Z1, et distincte du logement circonférentiel 15 formant le siège 14, tel que cela est visible sur les figures 3 et 4.

On notera que le dispositif de serrage 1 est de préférence dimensionné de telle sorte que le bandeau de cerclage 16, et/ou respectivement le ressort annulaire de rappel logé dans la gorge d'accroche 18, soit déjà précontraint, en tension circonférentielle élastique, lorsque le dispositif de serrage 10 se trouve en configuration rétractée, et que l'intensité de cette contrainte en tension augmente lorsque l'on passe de la configuration rétractée à la configuration déployée.

En maintenant en permanence le bandeau de cerclage 16, et/ou respectivement le ressort annulaire de rappel, en tension, et donc non lâche, on évite notamment que ledit bandeau de cerclage 16, respectivement ledit ressort de rappel, ne glisse hors du logement circonférentiel 15, respectivement hors de la gorge d'accroche 18, des mors de serrage 12.

Bien entendu, le bandeau de cerclage 16 pourra présenter toute forme de section appropriée.

De préférence, tel ledit bandeau de cerclage 16 pourra être agencé de sorte à présenter une gorge annulaire 17 formant le siège 14 qui permet de recevoir la tringle 3.

Avantageusement, la face radialement externe 16_out du bandeau de cerclage 16 présentera ainsi un profil de siège 14 en creux, qui formera un réceptacle stable pour la tringle 3.

Selon l'invention, le système de déploiement 13 comprend un parallélogramme articulé 20 dont les quatre sommets forment respectivement un premier pivot 21, un second pivot 22, un troisième pivot 23 et un quatrième pivot 24.

Les axes de rotation respectif de ces quatre pivots sont de préférence parallèles entre eux, et de préférence disposés perpendiculairement à un plan de référence, dit « plan sagittal » PS, qui contient l'axe central Z1 et qui divise de préférence ainsi le tambour 1 en deux parties sensiblement voire exactement symétriques l'une de l'autre.

Ce plan sagittal PS correspond ici au plan de coupe utilisé pour les figures 1, 2, 3 et 4.

Entre autres avantages, une structure en parallélogramme articulé 20 présente une grande simplicité, une indéniable légèreté, et une relative compacité au regard de l'amplitude des mouvements qu'une telle structure autorise.

Tel que cela est bien visible sur les figures 3 et 4, le premier pivot 21 et le second pivot 22 sont solidaires du fût 11 et positionnés respectivement à une première distance radiale d21 de l'axe central Z1 et à une seconde distance radiale d22 de l'axe central Z1, seconde distance radiale d22 qui est supérieure à la première distance radiale d21, de sorte à définir une première base 25 dite « base fixe » 25 du parallélogramme articulé 20, base fixe 25 qui s'étend transversalement à l'axe central Z1, tandis que le troisième pivot 23 et le quatrième pivot 24 sont solidaires d'un mors de serrage 12 correspondant, et définissent une seconde base 26 dite « base mobile » 26 du parallélogramme articulé 20.

On notera que, au sein de la base fixe 25, le premier pivot 21 est, et reste (que ce soit en configuration rétractée, en configuration déployée, lors du passage de la configuration rétractée à la configuration déployée, ou réciproquement), plus proche de l'axe central Z1 que le second pivot 22. De même, au sein de la base mobile 26, le troisième pivot 23 est, et reste, radialement plus proche de l'axe central Z1 que le quatrième pivot 24, en configuration rétractée, en configuration déployée, ou lors du passage de l'une de ces configurations à l'autre.

La base mobile 26 est maintenue parallèle à la base fixe 25 par un premier bras 27 qui relie le premier pivot 21 au troisième pivot 23 de sorte à définir un premier côté 27A du parallélogramme articulé 20, et par un second bras 28 qui relie le second pivot 22 au quatrième pivot 24 de sorte à définir un second côté 28A du parallélogramme articulé 20, parallèle au premier côté 27A.

Par « premier côté » 27A, on désigne ici, quelle que soit par ailleurs la forme du premier bras 27 qui est utilisé pour connecter matériellement entre eux le premier pivot 21 avec le second pivot 23, le segment de droite qui, géométriquement, joint le premier pivot 21 au troisième pivot 23, et plus particulièrement le segment de droite qui est perpendiculaire et sécant aux axes du premier pivot 21 et du troisième pivot 23 et qui joint ainsi, dans le plan sagittal PS, le centre de rotation du premier pivot 21 au centre de rotation du troisième pivot 23, c'est-à-dire qui joint le premier sommet du parallélogramme articulé 20 au troisième sommet du parallélogramme articulé 20.

De même, on désigne *mutatis mutandis* par « second côté » 28A le segment de droite qui joint géométriquement le second sommet du parallélogramme articulé 20, donc le centre de rotation du second pivot 22, au quatrième sommet du parallélogramme articulé 20 formé par le centre de rotation du quatrième pivot 24.

On notera que la forme du premier bras 27, respectivement la forme du second bras 28, peut varier sans sortir du cadre de l'invention.

Ceci étant, par simplicité de construction, le premier bras 27 et le second bras 28 seront de préférence rectilignes, et donc parallèles entre eux, de sorte à coïncider avec le premier côté 27A, respectivement avec le second côté 28A, au moins dans le plan sagittal PS susmentionné, tel que cela est illustré sur les figures 1, 2, 3 et 4.

Du fait de l'agencement en parallélogramme, la longueur de la base fixe 25, qui est égale à l'entraxe entre le premier pivot 21 et le second pivot 22, est égale à la longueur de la base mobile 26, qui correspond quant à elle à l'entraxe entre le troisième pivot 23 et le quatrième pivot 24.

De même, la longueur du premier côté 27A défini par le premier bras 27, qui est égale à l'entraxe entre le premier pivot 21 et le troisième pivot 23, et aussi égale à la longueur du second côté 28A qui correspond à l'entraxe entre le second pivot 22 et le quatrième pivot 24.

A titre indicatif, la longueur desdits premier côté 27A et second côté 28A, qui dépend notamment de l'encombrement autorisé du tambour 1 ainsi que du diamètre de la portion dite « seat » de la zone basse 2B du bandage 2 qui est destinée à venir reposer sur la jante, peut être comprise entre 120 mm et 200 mm, de préférence entre 140 mm et 180 mm, et par exemple égale à 152 mm.

L'agencement du parallélogramme articulé 20 selon l'invention, avec une base fixe 25 qui s'étend transversalement à l'axe central Z1, voire perpendiculairement audit axe central Z1, permet avantageusement de placer la partie fixe dudit parallélogramme articulé 20, à savoir la base fixe 25 solidaire du fût 11, à distance axiale de la base mobile 26, et donc à distance axiale des mors de serrage 12 et de la zone centrale 1C du tambour, et de conserver ladite base fixe 25 à distance axiale desdits mors de serrage 12 et de la zone centrale 1C du tambour lors du passage de la configuration rétractée à la configuration déployée.

Ainsi, une partie significative du volume occupé par le système de déploiement 13 se situe axialement en-dehors de la zone centrale 1C du tambour 1.

Selon un agencement préférentiel de l'invention, la longueur de la base fixe 25, c'est-à-dire l'entraxe entre le premier pivot 21 et le second pivot 22, est strictement inférieure à la longueur du premier côté 27A, c'est-à-dire à l'entraxe entre le premier pivot 21 et le troisième pivot 23.

En d'autres termes, les première et seconde bases 25, 26 forment de préférence les petits côtés du parallélogramme articulé 20, tandis que les premier et second bras 27, 28 définissent les grands côtés dudit parallélogramme articulé 20.

Un tel agencement permet de minimiser l'encombrement radial du système de déploiement 13, tout en favorisant le déport axial de la base fixe 25 par rapport à la base mobile 26 qui porte le mors de serrage 12, puisque la distance dudit déport axial dépend de la longueur choisie pour le premier côté 27A.

De préférence, la base fixe 25 s'étend dans un plan sensiblement normal à l'axe central Z1 du tambour 1, par exemple formant un angle compris entre -5 deg et +5 deg par rapport au plan normal audit axe central Z1, et de façon particulièrement préférentielle dans un plan exactement normal audit axe central Z1.

Outre qu'une telle orientation transverse, voire radiale, de la base fixe 25, et donc de la base mobile 26 qui est parallèle à cette dernière, contribue à dégager la zone centrale 1C du tambour comme indiqué plus haut, un tel agencement permet de déplacer le mors de serrage 12 selon une trajectoire sensiblement radiale par rapport au fût 11 lors du passage de la configuration rétractée à la configuration déployée, et facilite la génération d'un effort de serrage F_clamp comprenant une composante centrifuge, perpendiculaire à l'axe central Z1, qui soit de forte intensité.

Par ailleurs, de préférence, l'angle d'inclinaison A27 que forme, par rapport à l'axe central Z1, le premier côté 27A du parallélogramme articulé 20, qui joint le premier pivot 21 au troisième pivot 23, reste compris, lors du passage de la configuration rétractée à la configuration déployée et inversement, entre - 15 degrés et +15 degrés, de préférence entre -10 degrés et +6 degrés.

Il en ira bien entendu de même pour l'angle d'inclinaison, identique compte-tenu du parallélisme, que forme le second côté 28A par rapport à l'axe central Z1.

Par convention, l'angle d'inclinaison A27 pourra être mesuré entre l'axe central Z1 et le premier côté 27A, respectivement le second côté 28A, dans le plan sagittal PS qui est normal aux axes de rotation respectifs des pivots 21, 23 reliés par ledit côté 27A, et qui contient l'axe central Z1.

L'angle d'inclinaison A27 sera par convention compté négativement lorsque le premier bras 27 penche de façon convergente vers l'axe central Z1, c'est-à-dire se rapproche dudit axe central Z1 au fur et à mesure que l'on s'éloigne du premier pivot 21 pour s'approcher du troisième pivot 23 et de la zone centrale 1C du tambour, de sorte que ledit premier bras 27 suit une pente descendante comme cela est visible sur les figures 1 et 3 et, à l'inverse, l'angle d'inclinaison A27 sera par convention compté positivement lorsque le premier bras 27 diverge de l'axe central Z1 en s'éloignant progressivement dudit axe central Z1 au fur et à mesure que l'on s'éloigne du premier pivot 21 pour s'approcher du troisième pivot 23 et de la zone centrale 1C, de sorte que ledit premier bras 27 suit une pente ascendante comme cela est notamment visible sur la figure 4.

Avantageusement, en disposant et en confinant le premier côté 27A, et donc ici le premier bras 27, et par conséquent également le second côté 28A parallèle audit premier côté 27A, dans une orientation sensiblement axiale, quasiment parallèle à l'axe central Z1 du tambour, on peut :
- d'une part éloigner axialement la base fixe 25 de la base mobile 26 et donc de la zone centrale 1C du tambour 1, selon une distance de déport qui est quasiment égale à la longueur du premier côté 27A, si bien que l'on tire pleinement profit de la longueur du premier bras 27 pour réaliser ce déport axial,
- et d'autre part maintenir le débattement axial non désiré de la base mobile 26 par rapport au fût 11, lors du mouvement pendulaire en tangage des premier et second bras 27, 28 qui permet le passage de la configuration rétractée à la configuration déployée, sous un seuil de tolérance prédéterminé, par exemple fixé à 0,5 mm (cinq dixièmes de millimètre).

Concernant ce dernier point, on notera en effet que, idéalement, on souhaite que le mouvement des mors de serrage 12 nécessaire au passage de la configuration rétractée à la configuration déployée ne perturbe pas, ou à tout le moins pas significativement, la position axiale de la tringle 3 par rapport au fût 11, de manière notamment à ce que l'opération de serrage n'induise pas de déformation ni de déstabilisation des éléments constitutifs de la carcasse 4. A ce titre, on recherchera de préférence un mouvement des mors de serrage 12 qui soit le plus perpendiculaire possible par rapport à l'axe central Z1, et donc quasiment radial voire strictement radial.

Plus particulièrement, on peut considérer que le passage de la configuration rétractée à la configuration déployée s'effectue en passant par une configuration intermédiaire, dite « configuration partiellement déployée », dans laquelle la base mobile 26 est plus éloignée de l'axe central Z1 qu'en configuration rétractée, et qui correspond au stade où le siège 14 entre en contact avec le bandage 2 de sorte à commencer à exercer une action porteuse sur la tringle 3, puis se poursuit lorsque l'on accentue l'éloignement radial de ladite base mobile 26 par rapport à l'axe central Z1, et donc l'effort de serrage exercé sur la tringle 3, jusqu'à atteindre la configuration finale, c'est-à-dire la configuration totalement déployée, à laquelle correspond l'effort de serrage F_clamp désiré.

On cherchera alors à minimiser le débattement axial du siège 14, et donc de la tringle 3, lors du passage, que l'on désignera par « course de serrage », de la configuration intermédiaire partiellement déployée à la configuration finale totalement déployée, c'est-à-dire entre le moment où le siège 14 du mors de serrage 12 entre en contact avec la zone basse 2B et commence à agir sur la tringle 3 et le moment où le siège 14, resté en contact avec la zone basse 2B, atteint la position déployée qui correspond au serrage souhaité de la tringle 3.

C'est pourquoi on imposera de préférence une limite maximale de débattement axial autorisé lors du passage de la configuration rétractée à la configuration déployée, et plus particulièrement lors de la course de serrage susmentionnée.

A titre indicatif, et comme indiqué plus haut, cette limite peut être par exemple fixée à 0,5 mm (cinq dixièmes de millimètre).

A titre indicatif, la limite de débattement axial autorisé pendant la course de serrage, de la configuration intermédiaire à la configuration totalement déployée, sera de préférence fixée à 0,1 mm (un dixième de millimètre).

La configuration du parallélogramme articulé 20, et notamment la longueur des premier et second côtés 27A, 28A, ainsi que leur angle d'inclinaison A27 de départ et d'arrivée par rapport à l'axe central Z1, seront adaptés en conséquence, tel que cela est expliqué ci-dessous.

De façon particulièrement préférentielle, le parallélogramme articulé 20 est agencé de telle sorte que l'angle d'inclinaison A27 change de signe lors du passage de la configuration rétractée à la configuration déployée, et plus préférentiellement au cours de la course de serrage, c'est-à-dire que le premier côté 27A et le second côté 28A, au cours de ce mouvement de déploiement, basculent de sorte à inverser l'orientation de leur inclinaison en tangage par rapport à l'axe central Z1, et passent donc par une configuration intermédiaire dans laquelle lesdits premier et second côtés 27A, 28A sont parallèles à l'axe central Z1, et dans laquelle l'angle d'inclinaison A27 est nul.

Structurellement, cela se traduit par le fait que, en configuration rétractée, le troisième pivot 23 se situe à une distance radiale d23 de l'axe central Z1 qui est inférieure à la distance radiale d21 (fixe) à laquelle se trouve le premier pivot 21 (figure 3), si bien que ledit troisième pivot 23 est plus proche de l'axe central Z1 que le premier pivot 21, tandis qu'en configuration déployée, le troisième pivot 23 se retrouve à une distance radiale d23 de l'axe central Z1 qui est supérieure à la distance radiale 21 à laquelle se trouve le premier pivot 21 (figure 4), si bien que le troisième pivot 23 est plus éloigné de l'axe central Z1 que le premier pivot 21.

Le mouvement de déploiement de la base mobile 26, puis le mouvement de retour en rétractation, et plus préférentiellement la portion de ces mouvements qui correspond spécifiquement à la course de serrage (puis au mouvement de retour correspondant), suit donc un arc de cercle qui se répartit avantageusement de part et d'autre de l'extremum que constitue le passage par l'angle d'inclinaison A27 nul, ce qui a pour effet de minimiser le débattement axial.

En effet, la composante de déplacement axial qui est générée par la première partie du mouvement de déploiement, au cours de laquelle le premier côté 27A quitte la position de départ qu'il occupe en configuration rétractée, ou plus particulièrement en configuration partiellement déployée, laquelle position de départ correspond par convention à un angle d'inclinaison A27 négatif, pour adopter une position intermédiaire parallèle à l'axe central Z1, c'est-à-dire la partie de mouvement au cours de laquelle on réduit (en valeur absolue) l'angle d'inclinaison A27 pour parvenir à une inclinaison nulle, est compensée au moins en partie par la composante de déplacement axial, de sens contraire, qui est générée lors de la seconde partie du mouvement de déploiement, lorsque le premier côté 27A quitte la position intermédiaire parallèle à l'axe central et augmente son angle d'inclinaison A27 pour atteindre l'inclinaison non nulle (ici positive par convention) qui correspond à la configuration déployée (configuration de serrage).

Le déplacement axial résultant de la base mobile 26 par rapport au fût 11 entre la configuration rétractée et la configuration déployée est donc minimisé, voire sensiblement annulé, alors même que le déplacement radial utile de ladite base mobile 26 peut être significatif.

On notera en outre que le déplacement radial de la base mobile 26, et donc le déplacement radial du siège 14, qui correspond à la course de serrage, peut être en pratique relativement faible, notamment en raison du caractère quasi-inextensible de la tringle 3, qui permet d'accentuer rapidement l'effort de serrage avec un déplacement radial de faible amplitude, sitôt que le contact du siège 14 est établi avec la zone basse 2B. A titre indicatif, ledit déplacement radial correspondant à la course de serrage pourra ainsi être compris entre 2 mm et 10 mm, par exemple de l'ordre de 4 mm.

Si l'on considère une longueur des côtés 27A, 28A du parallélogramme articulé 20 égale à 152 mm, comme indiqué plus haut, un déplacement radial de 4 mm correspond à une course angulaire (changement d'angle d'inclinaison A27) de l'ordre de 3 degrés.

Si l'on répartit cette course angulaire de 3 degrés, correspondant à la course de serrage souhaitée, de façon équilibrée par rapport à l'horizontale (i.e. par rapport à la direction donnée par l'axe central Z1), le débattement angulaire des bras 27, 28 par rapport à la position horizontale, dite « position neutre », sera donc de +/- 1,5 degrés.

Le débattement axial de la base mobile 26, et donc du siège 14 et de la tringle 3, lorsque ladite base mobile 26 parcourt cet arc de 3 degrés passant par la position horizontale, est égal à la différence entre d'une part le rayon dudit arc, à savoir la longueur L_27A du côté 27A, qui correspond à la position axiale dans laquelle se trouve ladite base mobile 26 par rapport à la base fixe 25 lorsque le bras 27 est horizontal, et d'autre part la projection de ce même côté 27A sur l'horizontale lorsque ledit côté 27A a basculé de 1,5 degré par rapport à l'horizontale pour atteindre la configuration déployée.

Ainsi, dans l'exemple ci-dessus, le débattement axial vaudra : L_27A - L_27A^{∗}cos(1,5 degré), soit, pour une longueur de côté L_27A de 152 mm, un débattement axial de 0,052 mm, bien inférieur à la limite de 0,1 mm exprimée ci-dessus.

Le système de déploiement 13 comprend bien entendu un mécanisme d'entraînement 30 qui est agencé pour coopérer avec le parallélogramme articulé 20 de manière à pouvoir sélectionner et modifier la position radiale d26 de la base mobile 26 par rapport à la base fixe 25, afin de passer de la configuration rétractée à la configuration déployée, et inversement, pour revenir de la configuration déployée à la configuration rétractée.

Le mécanisme d'entraînement 30 pourra déplacer la base mobile 26 en déformant le parallélogramme articulé 20, c'est-à-dire en modifiant de façon contrôlée la conformation géométrique du parallélogramme articulé en faisant varier de manière appropriée les angles au sommet du parallélogramme articulé 20, grâce à la mobilité relative conférée par les premier, second, troisième et quatrième pivots 21, 22, 23, 24.

Le mécanisme d'entraînement 30 pourra comprendre à cet effet tout organe de motorisation 31 adapté, par exemple un vérin 40, de préférence pneumatique, placé sous la dépendance d'une unité de contrôle adaptée, par exemple d'un calculateur électronique.

De préférence, ledit organe de motorisation 31 entraînera un organe mobile 32, tel qu'un curseur 32, en déplacement axial relatif, le long du fût 11 et de l'axe central Z1, par rapport à la position axiale, fixe sur le fût 11, des premier et second pivots 21, 22.

Ainsi, on pourra actionner le système de déploiement 13, et plus particulièrement modifier la conformation du parallélogramme articulé 20 pour passer de la configuration rétractée à la configuration déployée, ou inversement, sans avoir à déplacer axialement le parallélogramme articulé 20 dans son ensemble, et plus particulièrement en conservant les premier et second pivots 21, 22, et donc la base fixe 25, en position axiale fixe sur le fût 11, en retrait de la zone centrale 1C du tambour 1.

Pour déployer le siège 14, il suffira en effet de déplacer axialement le curseur 32, qui est moins encombrant que le parallélogramme articulé 20 dans son ensemble, par rapport audit parallélogramme articulé 20, ici en éloignant ledit curseur 32 de la position axiale (de préférence commune) des premier et second pivots 21, 22 et en rapprochant axialement ledit curseur 32 de la zone centrale 1C.

De préférence, chaque mors de serrage 12, indépendant des autres mors de serrage 12, comprend son propre système de déploiement 13 individuel, placé dans le secteur angulaire concerné du fût 11, autour de l'axe central Z 1.

Les différents systèmes de déploiement 13, ainsi répartis - tout comme les mors de serrage 12 qu'ils actionnent - selon un agencement en étoile autour de l'axe central Z1, pourront avantageusement être coordonnés, et notamment synchronisés, au moyen d'une même unité de contrôle, qui pilotera le ou les mécanismes d'entraînement 30 associés aux différents mors de serrage 12.

Par ailleurs, le fût 11 est de préférence monté mobile en translation sur le tambour 1, le long de l'axe central Z1, de sorte à pouvoir rapprocher du plan équatorial P_EQ du bandage 2, lors de l'étape de conformation, la tringle 3 qui est portée par le siège 14 embarqué sur ledit fût 11.

Ce mouvement du fût 11 en rapprochement axial du plan équatorial P_EQ du bandage 2 est avantageusement dissocié et indépendant des mouvements radiaux, ou quasi-radiaux, du système de déploiement 13 et plus particulièrement des mouvements radiaux, ou quasi-radiaux, des bases mobiles 26 des parallélogrammes articulés 20.

Il est ainsi possible de venir tout d'abord serrer la tringle 3 en déployant radialement les mors de serrage 12, puis ensuite, une fois la tringle 3 rendue solidaire du fût 11 par l'effort de serrage F_clamp centrifuge, de déplacer axialement la tringle 3, 3_1 pour la rapprocher du plan équatorial P_EQ, et de l'autre tringle 3_2, afin de conformer la carcasse 4.

Selon une caractéristique préférentielle qui peut constituer une invention à part entière, notamment en combinaison avec tout système de déploiement 13 ou tout système élévateur utilisant un parallélogramme articulé 20 monté sur un support de type fût 11 ou tout autre support approprié, assimilable par convention à un fût 11 et qui s'étend selon une direction considérée comme axe central Z1, et ce, que ledit parallélogramme articulé 20 soit utilisé en lien avec le déploiement d'un tambour 1 de confection de bandages pneumatiques ou pour toute autre application, le système de déploiement 13 comprend :
- un curseur 32 qui est guidé sur le fût 11, de préférence en translation, de sorte à pouvoir se déplacer, sous le contrôle d'un organe de motorisation 31, tel qu'un vérin 40 à piston 41, au moins selon une composante de déplacement axiale qui est parallèle à l'axe central Z1,
- un poussoir 33, qui est solidaire de la base mobile 26 du parallélogramme articulé 20 et qui présente, vis-à-vis du curseur 32 et de l'axe central Z1, une rampe 34 incurvée convexe,
- un patin de liaison 35, qui est porté par le curseur 32, qui présente un berceau 36 concave avec lequel la rampe 34 du poussoir 33 coopère en appui glissant, et qui est monté basculant sur le curseur 32 au moyen d'un pivot dit « pivot de tangage » 37 de sorte à pouvoir adapter son inclinaison par rapport à l'axe central Z1 en fonction de la position dudit patin de liaison 35 le long de la rampe 34 du poussoir 33,
de telle sorte qu'un déplacement du curseur 32 sur le fût 11 le long de l'axe central Z1 est converti par le glissement du patin de liaison 35 sur la rampe 34 du poussoir 33 en une variation de la distance radiale d33 du poussoir 33 à l'axe central Z1, et donc en une variation correspondante de la distance radiale d26 de la base mobile 26 du parallélogramme articulé 20 par rapport à l'axe central Z1.

Par commodité de représentation, on pourra assimiler la distance radiale à l'axe central Z1 de la base mobile d26 à la distance radiale à l'axe central Z1 du troisième pivot d23, et plus particulièrement de l'axe dudit troisième pivot 23, puisque ledit troisième pivot 23 fait partie de ladite base mobile 26.

L'axe du pivot de tangage 37 est avantageusement parallèle aux axes des premier, second, troisième et quatrième pivots 21, 22, 23, 24, et donc normal au plan sagittal PS.

Comme indiqué plus haut, le curseur 32 se déplace sur le fût 11 relativement à la position axiale, qui est fixe par rapport audit fût 11, des premier et second pivots 21, 22, et donc relativement à la position axiale, fixe par rapport au fût 11, de la base fixe 25.

Bien entendu, la position angulaire du curseur 32 sur le fût 11 en azimut autour de l'axe central Z1 est indexée par rapport audit fût 11, de manière à ce que la position angulaire en azimut du curseur 32 coïncide avec la position angulaire en azimut de la base mobile 26 correspondante.

Les centres de courbure du berceau 36 et de la rampe 34, et plus particulièrement lesdits centres de courbure considérés dans le plan sagittal PS, seront orientés tous les deux du même côté par rapport à l'interface entre le berceau 36 du patin de liaison 35 et la rampe 34 du poussoir 33, et situés radialement, par rapport à l'axe central Z1, au-delà du centre du pivot de tangage 37.

De préférence, lesdits centres de courbure du berceau 36 et de la rampe 34 seront confondus, de sorte que les courbures respectives du berceau 36 et de la rampe 34 soient identiques, et que le berceau 36 épouse ainsi parfaitement la rampe 34.

De préférence, le berceau 36 présentera, en particulier dans le plan sagittal PS, une courbure de signe constant, c'est-à-dire ne présentera pas d'inversion de courbure, et il en ira de même pour la rampe 34, qui présentera de préférence une courbure de signe constant, et de même signe que la courbure du berceau 36.

De façon particulièrement préférentielle, le rayon de courbure du berceau 36, en particulier dans le plan sagittal PS, sera constant, de sorte que le berceau 36 est façonné en arc de cercle.

Plus globalement, le berceau 36 formera de préférence une portion de cylindre droit de base circulaire et dont la génératrice est parallèle à l'axe de pivot de tangage 37, parallèle à l'axe des premier, second, troisième et quatrième pivots 21, 22, 23, 24, et donc normale au plan sagittal PS.

De même, la rampe 34 sera de préférence façonnée en arc de cercle, selon une portion de cylindre de base circulaire dont la génératrice est parallèle à l'axe du pivot de tangage 37, et donc normale au plan sagittal PS, et dont le rayon de courbure est de préférence égal à celui du berceau 36.

Avantageusement, l'utilisation d'une géométrie d'interface courbe entre le berceau 36 et la rampe 34 conjuguée permet de convertir de façon efficace, progressive, et bien maîtrisée, l'effort axial qui est généré par l'organe de motorisation 31, et qui tend à déplacer axialement le curseur 32, ici en direction du plan équatorial P_EQ, en un effort radial, en l'occurrence en l'effort de serrage F_clamp centrifuge.

En particulier, il est possible de générer progressivement, mais néanmoins de faire croître rapidement, l'effort de serrage F_clamp radial, en utilisant pour cela une course axiale du curseur 32 relativement peu étendue, ce qui permet de conserver un système de déploiement 13 compact, bien que puissant.

Cette interface courbe entre le berceau 36 et la rampe 34 offre en outre une importante superficie de contact, qui assure une grande stabilité et permet de générer une composante radiale d'effort de serrage F_clamp particulièrement élevée, tout en permettant une meilleure maîtrise des pressions de contact et des phénomènes de frottements voire de déformation associés.

A ce titre, on notera que l'on pourra utiliser, notamment pour la réalisation du patin 35 et plus particulièrement du berceau 36, un alliage à base de cuivre, par exemple un bronze, qui permettra d'établir avec la rampe 34 un contact métal/métal, très résistant à la compression mais n'opposant que peu de frottement au mouvement de glissement du berceau 36 sur la rampe 34, et qui ne nécessitera donc pas d'entretien ni de lubrification additionnelle.

L'emploi d'une géométrie courbe et la maîtrise du frottement associé permet en outre, comme on le détaillera par la suite, de définir un seuil d'irréversibilité, à partir duquel le curseur 32 et le patin 35 occupent, par rapport à la rampe 34 et à la tringle 3, une position auto-bloquante, dans laquelle ils s'opposent au retour spontané du curseur 32 sous l'effort exercé par la tringle 3 sur le siège 34 en réaction à l'effort de serrage F_clamp, et verrouillent ainsi le système de déploiement 13 en configuration déployée.

De préférence, le curseur 32 est entraîné par un organe de motorisation 31 formé par un vérin 40, préférentiellement un vérin pneumatique, qui comporte un piston 41 monté mobile dans une chemise 42.

Un tel vérin 40 permet avantageusement de générer, de manière relativement simple, un important effort de poussée axiale, converti ensuite en effort de serrage F_clamp radial par le mécanisme d'entraînement 30 décrit ci-dessus.

Avantageusement, l'effort de poussée axiale pourra être d'autant plus élevé qu'il est possible, grâce au déport du vérin 40 hors de la zone centrale 1C du tambour, rendu possible par l'agencement en parallélogramme objet de l'invention, de prévoir une chemise 42 et un piston 41 qui possèdent une section, et donc une surface utile exposée à la pression, particulièrement large.

Le vérin 40 pourra de préférence être un vérin annulaire, centré sur l'axe central Z1, dont le piston 41, annulaire lui-aussi, pourra avantageusement actionner simultanément plusieurs mécanismes de déploiement 13, et donc plusieurs mors de serrage 12, voire la totalité des mors de serrage 12 répartis sur la circonférence du tambour 1.

De préférence, tel que cela est visible sur les figures 3 et 4, le curseur 32 peut être porté par le piston 41, tandis que la base fixe 25 du parallélogramme articulé 20 est fixée sur la chemise 42 du vérin 40.

Un tel agencement conjugue avantageusement compacité, simplicité et robustesse.

La réalisation de l'étanchéité entre le piston 41 et la chemise 42 est également simplifiée, puisque cette étanchéité peut être par exemple obtenue au moyen de simples joints racleurs 43, 44, par exemple des joints toriques ou des joints à lobes, ici centrés sur l'axe central Z1. Lesdits joints 43, 44 sont avantageusement logés dans des gorges concentriques à l'axe central Z1.

Par ailleurs, l'étanchéité statique entre le fût 11 et la culasse du vérin 31, et par conséquent entre la chemise 42 et le fût 11, est de préférence assurée par un joint torique 45, tel que cela est visible sur la figure 3.

Selon une caractéristique préférentielle qui peut constituer une invention à part entière, quel que soit par ailleurs l'agencement du système de déploiement 13, et par exemple indépendamment ou en combinaison avec un parallélogramme articulé 20 selon l'invention, le système de déploiement 13 possède un agencement de verrouillage anti-retour 50, qui s'enclenche lors du passage de la configuration rétractée à la configuration déployée, de manière à s'opposer à un retour spontané vers la configuration rétractée depuis la configuration déployée.

Plus particulièrement, ledit agencement de verrouillage anti-retour 50 permet au système de déploiement 13 de résister à l'action qu'exerce la tringle 3 sur le siège 14, sous l'effet de la gravité et/ou en réaction à l'effort de serrage F_clamp.

Avantageusement, un tel agencement de verrouillage anti-retour 50 permet, par son action autobloquante, de maintenir la tringle 3 en position, serrée et centrée sur le siège 14 déployé, même si l'on cesse d'activer l'organe de motorisation 31, et, plus particulièrement, même si l'on interrompt, volontairement ou non, l'alimentation en énergie dudit organe de motorisation 31, par exemple ici si l'on interrompt l'alimentation en pression du vérin 40.

Ainsi, on peut économiser de l'énergie et gagner en sécurité de fonctionnement, puisqu'il est possible, sitôt la configuration déployée atteinte, et l'agencement de verrouillage anti-retour 50 enclenché, de relâcher l'effort exercé par l'organe de motorisation 31, sans risque d'affaissement du système de déploiement 13.

Une fois l'agencement de verrouillage anti-retour 50 enclenché, le déverrouillage du système de déploiement 13 devra être commandé, c'est-à-dire opéré intentionnellement, pour autoriser le retour à la configuration rétractée.

Selon une possibilité de mise en oeuvre, l'agencement de verrouillage anti-retour 50 est obtenu par un effet de genouillère, selon lequel la course du curseur 32 est prévue pour que, lors du passage de la configuration rétractée à la configuration déployée, le centre du pivot de tangage 37 porté par ledit curseur 32 atteigne, et de préférence traverse, le plan fictif, dit « plan d'effort » PF, qui est normal à l'axe central Z1 et qui contient le contour fermé, dit « ligne moyenne » L3, constitué par l'ensemble des centres des sections droites de la tringle 3 considérées le long de ladite tringle 3, autour de l'axe central Z1.

En pratique, l'effort centripète de constriction qui est exercé par la tringle 3 sur le siège 14 déployé, en réaction à l'effort de serrage F_clamp centrifuge, est en effet sensiblement contenu dans ce plan d'effort PF, situé à l'aplomb de la gorge annulaire 17.

Par conséquent, ledit plan d'effort PF constitue un seuil de verrouillage, en ceci que, lorsque le curseur 32 se déplace suffisamment le long du fût 11, parallèlement à l'axe central Z1, pour que le centre du pivot de tangage 37 passe d'un côté à l'autre dudit plan d'effort PF, alors le moment exercé, autour du pivot de tangage 37, par la réaction de la tringle 3 à l'encontre du siège 14, et donc le moment exercé à l'encontre du patin de liaison 35 et du curseur 32, change de signe.

Si l'on prévoit une butée pour limiter la course en translation du curseur 32 sur le fût 11 en direction du plan équatorial P_EQ, ou une butée pour limiter la course en basculement, ici dans le sens horaire sur les figures 3 et 4, du patin de liaison 35 sur le curseur 32 via le pivot de tangage 37, ce changement de signe, qui tend à générer un renversement du mouvement de tangage du patin de liaison 35, a pour effet de bloquer fermement le patin de liaison 35 contre le curseur 32, et par conséquent de verrouiller en position la rampe 34, le poussoir 33, et le mors de serrage 12 porté par ce dernier.

Selon une autre possibilité de mise en oeuvre, l'agencement de verrouillage anti-retour 50 est obtenu par friction, par un agencement approprié du pivot de tangage 37, du berceau 36 et de la rampe 34 du poussoir 33, qui est choisi de manière à, lorsque la position axiale du curseur 32 atteint un seuil dit « seuil de verrouillage » suffisamment proche (tel que cela est visible sur la figure 4) de la position axiale d'un plan fictif, dit « plan d'effort » PF, qui est normal à l'axe central Z1 et qui contient le contour fermé, dit « ligne moyenne » L3, constitué par l'ensemble des centres des sections droites de la tringle 3 considérées le long de ladite tringle 3, autour de l'axe central Z1, maintenir l'effort résultant, qui résulte des contraintes exercées sur le siège 14 et qui s'exerce à l'interface entre le berceau 36 du patin de liaison 35 et la rampe 34 du poussoir 33, confiné à l'intérieur du cône de frottement de ladite interface.

A cet effet, on pourra notamment choisir, en fonction des matériaux constitutifs du berceau 36 et de la rampe 34, et donc en fonction du coefficient de frottement entre ces éléments, et en fonction des dimensions des bases 25, 26 et des côtés 27A, 28A du parallélogramme articulé 20, un dimensionnement et un agencement géométrique adaptés du pivot de tangage 37, de la course du curseur 32, et du rayon de courbure du berceau 36 et de la rampe 34, qui permettra, une fois que le curseur 32 aura atteint ou dépassé le seuil de verrouillage, d'empêcher le glissement de la rampe 34 dans le berceau 36, au moins dans le sens d'un retour vers la configuration rétractée.

De la sorte, en configuration déployée, le curseur 32 ne peut pas être renvoyé spontanément en arrière, vers la position que ledit curseur 32 occupe en configuration rétractée, sous la seule action exercée par la tringle 3 à l'encontre du siège 14, si bien que ledit curseur 32 reste interposé radialement, de même que le patin de liaison 35 et le poussoir 33, entre le mors de serrage 12, et plus particulièrement la base mobile 26, d'une part, et l'axe central Z1 du tambour 1 d'autre part, ce qui permet d'assurer la continuité du soutien du mors de serrage 12, et donc du siège 14, à l'encontre de la tringle 3.

Pour commander le déverrouillage du système de déploiement 13, en vue du retour du siège 14 de la configuration déployée à la configuration rétractée, on pourra par exemple mettre en légère dépression la chambre du vérin 40 afin de rappeler le piston 41 et le curseur 32, ici en éloignement axial de la zone centrale 1C du tambour, de manière suffisante pour débloquer ledit système de déploiement 13.

En variante, on pourra prévoir que le vérin 40 soit un vérin double effet comprenant, de part et d'autre axialement du piston 41, d'une part une première chambre, dite « chambre de déploiement », destinée à être mise en pression pour faire passer le piston 41, le curseur 32, et plus globalement le système de déploiement 13 de la configuration rétractée à la configuration déployée, comme indiqué ci-dessus, et d'autre part, de l'autre côté du piston 41, une seconde chambre, dite « chambre de rappel », destinée à être mise en pression pour commander le déverrouillage du système de déploiement 13 et le rappel du piston 41, du curseur 32 et plus globalement du système de déploiement 13 vers la configuration rétractée. Une telle solution permettra de bénéficier, si nécessaire, d'un effort de déverrouillage et de rappel plus important.

Dans le cas d'un agencement de verrouillage anti-retour 50 à genouillère cette commande active de déverrouillage, ici par exemple par mise en dépression de la chambre de déploiement du vérin 40 et/ou mise en pression de la chambre de rappel dudit vérin 40, aura pour effet de rappeler le curseur 32 en-deçà du seuil de verrouillage de ladite genouillère, ici typiquement en rappelant ledit curseur 32 de manière à lui faire retraverser le plan d'effort PF dans le sens inverse du sens de verrouillage, c'est-à-dire en éloignant axialement ledit curseur 32 du plan équatorial P_EQ et de la zone centrale 1C.

Respectivement, dans le cas d'un agencement de verrouillage anti-retour 50 à cône de frottement, cette commande active de déverrouillage aura pour effet de reconfigurer la disposition géométrique du curseur 32, du patin de liaison 35 et de la rampe 34, et donc de reconfigurer le cône de frottement à l'interface considérée, de sorte à libérer le glissement de la rampe 34 du poussoir 33 sur le berceau 36 du patin de liaison 35 dans le sens d'un retour vers la configuration rétractée.

Bien entendu, si l'agencement de verrouillage anti-retour 50 prend une autre forme, par exemple celle d'un cliquet agissant mécaniquement sur l'un des éléments mobiles du système de déploiement 13 pour bloquer le déplacement dudit élément mobile dans le sens d'un retour vers la configuration rétractée, on pourra prévoir des moyens de déverrouillage appropriés, tel qu'une tringle de manoeuvre, qui permettront d'escamoter sur commande le cliquet afin de libérer l'élément mobile retenu par ledit cliquet, et ainsi de libérer le système de déploiement 13.

On notera par ailleurs que, avantageusement, une fois l'agencement de verrouillage anti-retour 50 déverrouillé, l'effort élastique de constriction qui est exercé par bandeau de cerclage 16, ou le cas échéant par le ressort annulaire de rappel, à l'encontre des mors de serrage 12 assiste le mouvement de retour du système de déploiement 13 jusqu'à la configuration rétractée.

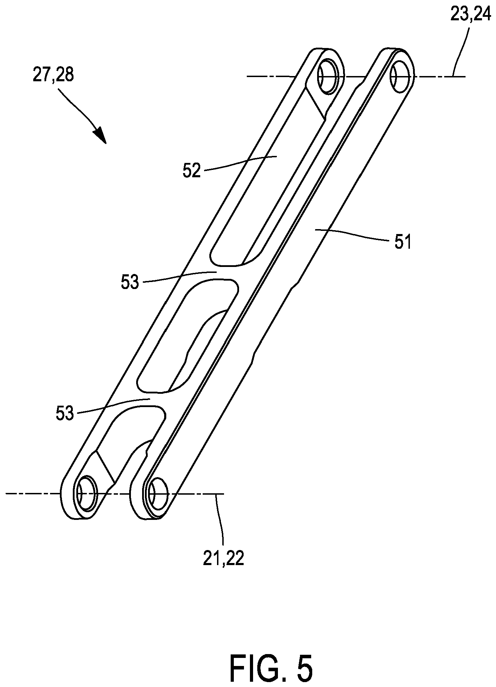

Par ailleurs, tel que cela est visible sur la figure 5, le premier bras 27 et/ou le second bras 28 du parallélogramme articulé 20 peut de préférence comprendre au moins deux longerons 51, 52 qui relient chacun l'un à l'autre les deux pivots 21, 23, respectivement 22, 24, reliés par le bras 27, 28 concerné, lesdits longerons 51, 52 étant maintenus l'un à l'autre par une ou plusieurs traverses 53.

Un telle structure, de type poutre en treillis, confère avantageusement une excellente rigidité au bras 27, 28, tout en préservant la légèreté de ce dernier.

Elle permet en outre au bras 27 de former une chape, ce qui assure un guidage précis et stable dudit bras 27 sur ses pivots 21, 23, en procurant audit bras une pluralité d'appuis répartis le long de l'axe de chacun desdits pivots 21, 23.

Bien entendu, de préférence, le tambour 1 pourra comprendre, tel que cela est schématisé en traits pointillés sur la figure 2, un premier fût 11_1 et un second fût 11_2 qui sont montés en translation le long de l'axe central Z1 et pourvus chacun d'un siège 14_1, 14_2 expansible, de telle manière qu'il est possible de conformer le bandage pneumatique 2 en serrant une première tringle 3_1 sur le siège expansible 14_1 du premier fût 11_1, et une seconde tringle 3_2 sur le siège expansible 14_2 du second fût 11_2, puis en rapprochant axialement les deux fûts 11_1, 11_2 l'un de l'autre de manière à rapprocher axialement l'une de l'autre les deux tringles 3_1, 3_2 portées par lesdits fûts 11_1, 11_2.

Lesdits fûts 11_1, 11_2 seront ainsi montés mobiles en opposition, de sorte à pouvoir rapprocher chacun du plan équatorial P_EQ la tringle 3_1, 3_2 qu'ils portent, et ainsi forcer ou accompagner, lors de l'opération de conformation, le mouvement qui permet de bomber la carcasse 4, en vue de rapporter sur ladite carcasse 4 le bloc sommet 7 puis de procéder à l'opération de rouletage.

Les systèmes de déploiement 13, de préférence à parallélogramme articulé 20, portés par chacun desdits fûts 11_1, 11_2 pourront être tels que décrit dans ce qui précède.

## Revendications

1. Tambour (1) destiné à la fabrication d'un bandage (2), de préférence un bandage pneumatique, comprenant au moins une tringle (3) annulaire, ledit tambour présentant un axe central (Z1) et étant pourvu d'un dispositif de serrage (10) qui comprend un fût (11) engagé sur l'axe central (Z1), ledit fût portant une pluralité de mors de serrage (12) qui sont répartis en plusieurs secteurs angulaires autour dudit axe central (Z1) et qui sont placés sous le contrôle d'un système de déploiement (13) qui permet de modifier la distance radiale desdits mors de serrage (12) par rapport à l'axe central (Z1), de sorte que lesdits mors de serrage définissent un siège (14) expansible que le système de déploiement (13) permet de faire passer alternativement d'une configuration rétractée, dans laquelle ledit siège (14) expansible occupe un premier diamètre dit « diamètre de repos » (D14_rest) qui est inférieur au diamètre intérieur de la tringle (D3_in), à une configuration déployée, dans laquelle les mors de serrage (12) se trouvent radialement plus éloignés de l'axe central (Z1) qu'en configuration rétractée de sorte que le siège (14) expansible s'étend sur un second diamètre dit « diamètre de serrage » (D14_clamp) qui est supérieur au diamètre de repos (D14_rest) et qui permet audit siège (14) expansible de venir en prise contre le diamètre intérieur de la tringle (D3_in) et d'exercer un effort de serrage (F clamp) centrifuge à l'encontre de ladite tringle (3), ledit tambour étant **caractérisé en ce que** le système de déploiement (13) comprend un parallélogramme articulé (20) dont les quatre sommets forment respectivement un premier (21), un second (22), un troisième (23) et un quatrième (24) pivot, le premier pivot (21) et le second pivot (22) étant solidaires du fût (11) et positionnés respectivement à une première distance radiale (d21) de l'axe central (Z1) et à une seconde distance radiale (d22) de l'axe central (Z1), supérieure à la première distance radiale (d21), de sorte à définir une première base dite « base fixe » (25) du parallélogramme articulé (20) qui s'étend transversalement à l'axe central (Z1), tandis que le troisième pivot (23) et le quatrième pivot (24) sont solidaires d'un mors de serrage (12), et définissent une seconde base dite « base mobile » (26) du parallélogramme articulé (20), qui est maintenue parallèle à la base fixe (25) par un premier bras (27) qui relie le premier pivot (21) au troisième pivot (23) de sorte à définir un premier côté (27A) du parallélogramme articulé, et par un second bras (28) qui relie le second pivot (22) au quatrième pivot (24) de sorte à définir un second côté (28A) du parallélogramme articulé (20), parallèle au premier côté (27A), et **en ce que** le système de déploiement (13) comprend un mécanisme d'entraînement (30) agencé pour coopérer avec le parallélogramme articulé (20) de manière à pouvoir sélectionner et modifier la position radiale (d26) de la base mobile (26) par rapport à la base fixe (25) afin de passer de la configuration rétractée à la configuration déployée et inversement.

2. Tambour selon la revendication 1 **caractérisé en ce que** le mécanisme d'entraînement (30) du système de déploiement (13) comprend :
- un curseur (32) qui est guidé sur le fût (11), de préférence en translation, de sorte à pouvoir se déplacer, sous le contrôle d'un organe de motorisation (31), au moins selon une composante de déplacement axiale qui est parallèle à l'axe central (Z1),
- un poussoir (33), qui est solidaire de la base mobile (26) du parallélogramme articulé (20) et qui présente, vis-à-vis du curseur (32) et de l'axe central (Z1), une rampe (34) incurvée convexe,
- un patin de liaison (35), qui est porté par le curseur, qui présente un berceau (36) concave avec lequel la rampe (34) du poussoir (33) coopère en appui glissant, et qui est monté basculant sur le curseur (32) au moyen d'un pivot dit « pivot de tangage » (37) de sorte à pouvoir adapter son inclinaison par rapport à l'axe central (Z1) en fonction de la position dudit patin de liaison (35) le long de la rampe (34) du poussoir,
de telle sorte qu'un déplacement du curseur (32) sur le fût (11) le long de l'axe central (Z1) est converti par le glissement du patin de liaison (35) sur la rampe (34) du poussoir (33) en une variation de la distance radiale (d33) du poussoir (33) à l'axe central (Z1), et donc en une variation correspondante de la distance radiale (d26) de la base mobile (26) du parallélogramme par rapport à l'axe central (Z1).

3. Tambour selon la revendication 2 **caractérisé en ce que** le curseur (32) est entraîné par un organe de motorisation (31) formé par un vérin (40), de préférence un vérin pneumatique, qui comporte un piston (41) monté mobile dans une chemise (42), et **en ce que** le curseur (32) est porté par le piston (41), tandis que la base fixe (25) du parallélogramme articulé (20) est fixée sur la chemise (42) du vérin (40).

4. Tambour selon l'une des revendications précédentes **caractérisé en ce que** l'angle d'inclinaison (A27) que forme, par rapport à l'axe central (Z1), le premier côté (27A) du parallélogramme articulé (20) reste compris, lors du passage de la configuration rétractée à la configuration déployée et inversement, entre - 15 degrés et +15 degrés, de préférence entre -10 degrés et +6 degrés.

5. Tambour selon l'une des revendications précédentes **caractérisé en ce que** le système de déploiement (13) possède un agencement de verrouillage anti-retour (50), qui s'enclenche lors du passage de la configuration rétractée à la configuration déployée, de manière à s'opposer à un retour spontané vers la configuration rétractée depuis la configuration déployée.

6. Tambour selon les revendications 2 et 5 **caractérisé en ce que** l'agencement de verrouillage anti-retour (50) est obtenu par un effet de genouillère, selon lequel la course du curseur (32) est prévue pour que, lors du passage de la configuration rétractée à la configuration déployée, le centre du pivot de tangage (37) porté par ledit curseur atteigne, et de préférence traverse, le plan fictif, dit « plan d'effort » (PF), qui est normal à l'axe central (Z1) et qui contient le contour fermé, dit « ligne moyenne » (L3), constitué par l'ensemble des centres des sections droites de la tringle (3) considérées le long de ladite tringle (3), autour de l'axe central (Z1).

7. Tambour selon les revendications 2 et 5 **caractérisé en ce que** l'agencement de verrouillage anti-retour (50) est obtenu par friction, par un agencement approprié du pivot de tangage (37), du berceau (36) et de la rampe (34) du poussoir (33), qui est choisi de manière à, lorsque la position axiale du curseur (32) atteint un seuil dit « seuil de verrouillage » qui est suffisamment proche de la position axiale d'un plan fictif, dit « plan d'effort » (PF), qui est normal à l'axe central (Z1) et qui contient le contour fermé, dit « ligne moyenne » (L3), constitué par l'ensemble des centres des sections droites de la tringle (3) considérées le long de ladite tringle (3), autour de l'axe central (Z1), maintenir l'effort résultant, qui résulte des contrainte exercées sur le siège (14) et qui s'exerce à l'interface entre le berceau (36) du patin de liaison (35) et la rampe (34) du poussoir (33), confiné à l'intérieur du cône de frottement de ladite interface.

8. Tambour selon l'une des revendications précédentes **caractérisé en ce que** les mors de serrage (12) sont pourvus, sur leur face radialement externe, d'un logement circonférentiel (15), de préférence sous forme d'une rainure en V, qui définit le siège (14) qui permet de recevoir la tringle (3).

9. Tambour selon la revendication 8 **caractérisé en ce qu'**il comprend un bandeau de cerclage (16), en matériau élastomère, qui forme un cerclage annulaire continu et fermé autour de l'axe central (Z1), qui vient prendre place dans le logement circonférentiel (15) des mors de serrage (12), et qui est agencé de sorte à présenter une gorge annulaire (17) formant le siège (14) qui permet de recevoir la tringle (3).

10. Tambour selon l'une des revendications précédentes **caractérisé en ce que** le premier bras (27) et/ou le second bras (28) du parallélogramme articulé comprend au moins deux longerons (51, 52) qui relient chacun l'un à l'autre les deux pivots (21, 23) reliés par le bras (27) concerné, lesdits longerons (51, 52) étant maintenus l'un à l'autre par une ou plusieurs traverses (53).

11. Tambour selon l'une des revendications précédentes **caractérisé en ce qu'**il comprend un premier fût (11_1) et un second fût (11_2) qui sont montés en translation le long de l'axe central (Z1) et pourvus chacun d'un siège expansible (14_1, 14_2), de telle manière qu'il est possible de conformer le bandage pneumatique (2) en serrant une première tringle (3_1) sur le siège expansible (14_1) du premier fût (11_1), et une seconde tringle (3_2) sur le siège expansible (14_2) du second fût (11_2), puis en rapprochant axialement les deux fûts (11_1, 11_2) l'un de l'autre de manière à rapprocher axialement l'une de l'autre les deux tringles (3_1, 3_2) portées par lesdits fûts.

## Patentansprüche

1. Trommel (1) zur Herstellung eines Reifens (2), bevorzugt eines Luftreifens, der mindestens einen ringförmigen Wulst (3) umfasst, wobei die Trommel eine zentrale Achse (Z1) aufweist und mit einer Klemmvorrichtung (10) versehen ist, die einen Schaft (11) umfasst, der auf die zentrale Achse (Z1) gesetzt ist, wobei der Schaft eine Mehrzahl von Klemmbacken (12) trägt, die in mehreren Winkelsektoren um die zentrale Achse (Z1) herum verteilt sind und die unter der Steuerung eines Ausfahrsystems (13) platziert werden, das es ermöglicht, den radialen Abstand der Klemmbacken (12) in Bezug auf die zentrale Achse (Z1) zu verändern, so dass die Klemmbacken einen expandierbaren Sitz (14) definieren, den das Ausfahrsystem (13) abwechselnd übergehen lassen kann aus einer zurückgezogenen Konfiguration, in der der expandierbare Sitz (14) einen ersten Durchmesser, "Ruhedurchmesser" (D14_rest) genannt, einnimmt, der kleiner als der Innendurchmesser des Wulstes (D3_in) ist, in eine ausgefahrene Konfiguration, in der sich die Klemmbacken (12) radial weiter von der zentralen Achse (Z1) entfernt als in der zurückgezogenen Konfiguration befinden, so dass sich der expandierbare Sitz (14) über einen zweiten Durchmesser, "Klemmdurchmesser" (D14_clamp) genannt, erstreckt, der größer als der Ruhedurchmesser (D14_rest) ist und der es dem expandierbaren Sitz (14) ermöglicht, in Eingriff gegen den Innendurchmesser des Wulstes (D3_in) zu gelangen und eine zentrifugale Klemmkraft (F_clamp) gegen den Wulst (3) auszuüben, wobei die Trommel **dadurch gekennzeichnet ist, dass** das Ausfahrsystem (13) ein gelenkiges Parallelogramm (20) umfasst, dessen vier Ecken jeweils einen ersten (21), einen zweiten (22), einen dritten (23) und einen vierten (24) Gelenkpunkt bilden, wobei der erste Gelenkpunkt (21) und der zweite Gelenkpunkt (22) fest mit dem Schaft (11) verbunden sind und in einem ersten radialen Abstand (d21) von der zentralen Achse (Z1) beziehungsweise in einem zweiten radialen Abstand (d22) von der zentralen Achse (Z1), der größer als der erste radiale Abstand (d21) ist, angeordnet sind, so dass eine erste Basis, "feststehende Basis" (25) genannt, des gelenkigen Parallelogramms (20) definiert wird, die sich quer zu der zentralen Achse (Z1) erstreckt, während der dritte Gelenkpunkt (23) und der vierte Gelenkpunkt (24) fest mit einer Klemmbacke (12) verbunden sind und eine zweite Basis, "bewegliche Basis" (26) genannt, des gelenkigen Parallelogramms (20) definieren, die parallel zu der feststehenden Basis (25) durch einen ersten Arm (27) gehalten wird, der den ersten Gelenkpunkt (21) mit dem dritten Gelenkpunkt (23) verbindet, so dass eine erste Seite (27A) des gelenkigen Parallelogramms definiert wird, und durch einen zweiten Arm (28), der den zweiten Gelenkpunkt (22) mit dem vierten Gelenkpunkt (24) verbindet, so dass eine zweite Seite (28A) des gelenkigen Parallelogramms (20) definiert wird, die parallel zu der ersten Seite (27A) ist, und dadurch, dass das Ausfahrsystem (13) einen Antriebsmechanismus (30) umfasst, der dazu ausgebildet ist, mit dem gelenkigen Parallelogramm (20) so zusammenzuwirken, dass die radiale Position (d26) der beweglichen Basis (26) in Bezug auf die feststehende Basis (25) gewählt und geändert werden kann, um von der zurückgezogenen Konfiguration zur ausgefahrenen Konfiguration und umgekehrt überzugehen.

2. Trommel nach Anspruch 1, **dadurch gekennzeichnet, dass** der Antriebsmechanismus (30) des Ausfahrsystems (13) umfasst:
- einen Schieber (32), der auf dem Schaft (11) geführt wird, bevorzugt translatorisch, so dass er sich unter der Steuerung eines Motorisierungsorgans (31) mindestens gemäß einer axialen Bewegungskomponente bewegen kann, die parallel zu der zentralen Achse (Z1) ist,
- einen Drücker (33), der fest mit der beweglichen Basis (26) des gelenkigen Parallelogramms (20) verbunden ist und der gegenüber dem Schieber (32) und der zentralen Achse (Z1) eine konvexe gekrümmte Rampe (34) aufweist,
- ein Verbindungsstück (35), das von dem Schieber getragen wird, das eine konkave Mulde (36) aufweist, mit der die Rampe (34) des Drückers (33) in gleitender Anlage zusammenwirkt, und das an dem Schieber (32) mittels eines Gelenkpunkts, "Nickgelenkpunkt" (37) genannt, schwenkbar gelagert ist, so dass seine Neigung in Bezug auf die zentrale Achse (Z1) in Abhängigkeit von der Position des Verbindungsstücks (35) entlang der Rampe (34) des Drückers angepasst werden kann,
so dass eine Bewegung des Schiebers (32) auf dem Schaft (11) entlang der zentralen Achse (Z1) durch das Gleiten des Verbindungsstücks (35) auf der Rampe (34) des Drückers (33) in eine Änderung des radialen Abstands (d33) des Drückers (33) zu der zentralen Achse (Z1) und somit in eine entsprechende Änderung des radialen Abstands (d26) der beweglichen Basis (26) des Parallelogramms in Bezug auf die zentrale Achse (Z1) umgewandelt wird.

3. Trommel nach Anspruch 2, **dadurch gekennzeichnet, dass** der Schieber (32) von einem Motorisierungselement (31) angetrieben wird, das durch einen Zylinder (40), bevorzugt einen pneumatischen Zylinder, gebildet wird, der einen Kolben (41) beinhaltet, der beweglich in einem Mantel (42) gelagert ist, und dadurch, dass der Schieber (32) von dem Kolben (41) getragen wird, während die feststehende Basis (25) des gelenkigen Parallelogramms (20) an dem Mantel (42) des Zylinders (40) fixiert ist.

4. Trommel nach einem der vorhergehenden Ansprüche, **dadurch gekennzeichnet, dass** der Neigungswinkel (A27), den die erste Seite (27A) des gelenkigen Parallelogramms (20) in Bezug auf die zentrale Achse (Z1) bildet, beim Übergang aus der zurückgezogenen Konfiguration in die ausgefahrene Konfiguration und umgekehrt zwischen - 15 Grad und +15 Grad, bevorzugt zwischen -10 Grad und +6 Grad bleibt.

5. Trommel nach einem der vorhergehenden Ansprüche, **dadurch gekennzeichnet, dass** das Ausfahrsystem (13) eine Rücklaufsperranordnung (50) besitzt, die beim Übergang aus der zurückgezogenen Konfiguration in die ausgefahrene Konfiguration einrastet, so dass sie einem spontanen Rücklauf aus der ausgefahrenen Konfiguration zur zurückgezogenen Konfiguration entgegenwirkt.

6. Trommel nach den Ansprüchen 2 und 5, **dadurch gekennzeichnet, dass** die Rücklaufsperranordnung (50) durch eine Kniehebelwirkung erhalten wird, gemäß der der Weg des Schiebers (32) so vorgesehen ist, dass, beim Übergang aus der zurückgezogenen Konfiguration in die ausgefahrene Konfiguration, der Mittelpunkt des von dem Schieber getragenen Nickgelenkpunkts (37) die fiktive Ebene, "Kraftebene" (PF) genannt, erreicht und bevorzugt durchquert, die rechtwinklig zu der zentralen Achse (Z1) ist und die die geschlossene Kontur, "Mittellinie" (L3) genannt, enthält, die durch die Gesamtheit der Mittelpunkte der geraden Abschnitte des Wulstes (3) gebildet wird, die entlang des Wulstes (3) um die zentrale Achse (Z1) herum betrachtet werden.

7. Trommel nach den Ansprüchen 2 und 5, **dadurch gekennzeichnet, dass** die Rücklaufsperranordnung (50) durch Reibung erhalten wird, durch eine geeignete Anordnung des Nickgelenkpunkts (37), der Mulde (36) und der Rampe (34) des Drückers (33), die so gewählt wird, dass sie, wenn die axiale Position des Schiebers (32) einen Schwellenwert, "Sperrschwellenwert" genannt, erreicht, der ausreichend nah zur axialen Position einer fiktiven Ebene, "Kraftebene" (PF) genannt, ist, die rechtwinklig zu der zentralen Achse (Z1) ist und die die geschlossene Kontur, "Mittellinie" (L3) genannt, enthält, die durch die Gesamtheit der Mittelpunkte der geraden Abschnitte des Wulstes (3) gebildet wird, die entlang des Wulstes (3) um die zentrale Achse (Z1) herum betrachtet werden, die resultierende Kraft hält, die aus den auf den Sitz (14) ausgeübten Beanspruchungen resultiert und die an der Grenzfläche zwischen der Mulde (36) des Verbindungsstücks (35) und der Rampe (34) des Drückers (33) ausgeübt wird, begrenzt auf den Innenraum des Reibkegels der Grenzfläche.

8. Trommel nach einem der vorhergehenden Ansprüche, **dadurch gekennzeichnet, dass** die Klemmbacken (12) auf ihrer radial äußeren Seite mit einer umfänglichen Aufnahme (15) versehen sind, bevorzugt in Form einer V-Nut, die den Sitz (14) definiert, der es ermöglicht, den Wulst (3) aufzunehmen.

9. Trommel nach Anspruch 8, **dadurch gekennzeichnet, dass** sie einen Umreifungsstreifen (16) aus Elastomermaterial umfasst, der eine durchgehende und geschlossene ringförmige Umreifung um die zentrale Achse (Z1) herum bildet, die in der umfänglichen Aufnahme (15) der Klemmbacken (12) Platz nimmt und die so ausgebildet ist, dass sie eine ringförmige Nut (17) aufweist, die den Sitz (14) bildet, der es ermöglicht, den Wulst (3) aufzunehmen.

10. Trommel nach einem der vorhergehenden Ansprüche, **dadurch gekennzeichnet, dass** der erste Arm (27) und/oder der zweite Arm (28) des gelenkigen Parallelogramms mindestens zwei Längsträger (51, 52) umfasst bzw. umfassen, die jeweils die beiden durch den betreffenden Arm (27) verbundenen Gelenkpunkte (21, 23) miteinander verbinden, wobei die Längsträger (51, 52) durch einen oder mehrere Querträger (53) aneinander gehalten werden.

11. Trommel nach einem der vorhergehenden Ansprüche, **dadurch gekennzeichnet, dass** sie einen ersten Schaft (11_1) und einen zweiten Schaft (11_2) umfasst, die entlang der zentralen Achse (Z1) translatorisch gelagert sind und jeweils mit einem expandierbaren Sitz (14_1, 14_2) versehen sind, so dass es möglich es, den Luftreifen (2) zu formen, indem ein erster Wulst (3_1) auf den expandierbaren Sitz (14_1) des ersten Schafts (11_1) geklemmt wird und ein zweiter Wulst (3_2) auf den expandierbaren Sitz (14_2) des zweiten Schafts (11_2) geklemmt wird, dann die beiden Schäfte (11_1, 11_2) einander axial angenähert werden, so dass die beiden von den Schäften getragenen Wülste (3_1, 3_2) einander angenähert werden.

## Claims

1. Drum (1) intended for manufacturing a tyre (2), preferably a pneumatic tyre, comprising at least one annular bead wire (3), said drum having a central axis (Z1) and being provided with a clamping device (10) which comprises a shaft (11) fitted along the central axis (Z1), said shaft bearing a plurality of clamping jaws (12) which are distributed in several angular sectors about said central axis (Z1) and which are placed under the control of a deployment system (13) which makes it possible to modify the radial distance of said clamping jaws (12) with respect to the central axis (Z1) such that said clamping jaws define an expandable seat (14) that the deployment system (13) moves alternately from a retracted configuration, in which said expandable seat (14) occupies a first diameter known as the "resting diameter" (D14_rest), which is less than the inside diameter (D3_in) of the bead wire, to a deployed configuration, in which the clamping jaws (12) are radially further away from the central axis (Z1) than in the retracted configuration, such that the expandable seat (14) extends over a second diameter known as the "clamping diameter" (D14_clamp), which is greater than the resting diameter (D14_rest) and which allows said expandable seat (14) to engage against the inside diameter (D3_in) of the bead wire and to exert a centrifugal clamping force (F_clamp) on said bead wire (3), said drum being **characterized in that** the deployment system (13) comprises an articulated parallelogram (20), the four apexes of which respectively form a first (21), a second (22), a third (23) and a fourth (24) pivot, the first pivot (21) and the second pivot (22) being secured to the shaft (11) and positioned respectively at a first radial distance (d21) from the central axis (Z1) and at a second radial distance (d22) from the central axis (Z1), greater than the first radial distance (d21), so as to define a first base known as the "fixed base" (25) of the articulated parallelogram (20) which extends transversely to the central axis (Z1), while the third pivot (23) and the fourth pivot (24) are secured to a clamping jaw (12) and define a second base known as the "mobile base" (26) of the articulated parallelogram (20), which is kept parallel to the fixed base (25) by a first arm (27) which connects the first pivot (21) to the third pivot (23) so as to define a first side (27A) of the articulated parallelogram, and by a second arm (28) which connects the second pivot (22) to the fourth pivot (24) so as to define a second side (28A) of the articulated parallelogram (20), parallel to the first side (27A), and **in that** the deployment system (13) comprises a drive mechanism (30) designed to cooperate with the articulated parallelogram (20) so that it is possible to select and modify the radial position (d26) of the mobile base (26) with respect to the fixed base (25) in order to pass from the retracted configuration to the deployed configuration and vice versa.

2. Drum according to Claim 1, **characterized in that** the drive mechanism (30) of the deployment system (13) comprises:
- a slider (32) which is guided on the shaft (11), preferably in translation, so as to be able to move, under the control of a driving member (31), at least along an axial movement component that is parallel to the central axis (Z1),
- a pusher (33) which is secured to the mobile base (26) of the articulated parallelogram (20) and which has, with respect to the slider (32) and to the central axis (Z1), a convex curved ramp (34),
- a connecting shoe (35) which is carried by the slider, which has a concave cradle (36) with which the ramp (34) of the pusher (33) cooperates in sliding contact, and which is mounted on the slider (32) in a tilting manner by means of a pivot known as the "pitch pivot" (37) so as to be able to adapt its inclination with respect to the central axis (Z1) depending on the position of said connecting shoe (35) along the ramp (34) of the pusher,
such that a movement of the slider (32) on the shaft (11) along the central axis (Z1) is converted by the sliding of the connecting shoe (35) on the ramp (34) of the pusher (33) into a variation in the radial distance (d33) of the pusher (33) from the central axis (Z1), and therefore into a corresponding variation in the radial distance (d26) of the mobile base (26) of the parallelogram with respect to the central axis (Z1).

3. Drum according to Claim 2, **characterized in that** the slider (32) is driven by a driving member (31) formed by a cylinder (40), preferably a pneumatic cylinder, which has a piston (41) mounted in a mobile manner in a sleeve (42), and **in that** the slider (32) is carried by the piston (41), while the fixed base (25) of the articulated parallelogram (20) is fixed to the sleeve (42) of the cylinder (40).

4. Drum according to one of the preceding claims, **characterized in that** the inclination angle (A27) formed, with respect to the central axis (Z1), by the first side (27A) of the articulated parallelogram (20) remains between -15 degrees and +15 degrees, preferably between -10 degrees and +6 degrees, during the passage from the retracted configuration to the deployed configuration and vice versa.

5. Drum according to one of the preceding claims, **characterized in that** the deployment system (13) has a non-return locking arrangement (50), which is activated during the passage from the retracted configuration to the deployed configuration, so as to prevent any spontaneous return to the retracted configuration from the deployed configuration.

6. Drum according to Claims 2 and 5, **characterized in that** the non-return locking arrangement (50) is obtained by a toggle effect, during which the travel of the slider (32) is provided such that, during the passage from the retracted configuration to the deployed configuration, the centre of the pitch pivot (37) carried by said slider reaches, and preferably crosses, the imaginary plane, known as the "force plane" (PF), which is normal to the central axis (Z1) and which contains the closed contour, known as the "mean line" (L3), formed by all of the centres of the cross sections of the bead wire (3) as considered along said bead wire (3), about the central axis (Z 1).

7. Drum according to Claims 2 and 5, **characterized in that** the non-return locking arrangement (50) is obtained by friction, by an appropriate arrangement of the pitch pivot (37), of the cradle (36) and of the ramp (34) of the pusher (33), which is chosen such that, when the axial position of the slider (32) reaches a threshold known as the "locking threshold", which is sufficiently close to the axial position of an imaginary plane, known as the "force plane" (PF), which is normal to the central axis (Z1) and which contains the closed contour, known as the "mean line" (L3), formed by all of the centres of the cross sections of the bead wire (3) as considered along said bead wire (3), about the central axis (Z1), the resultant force, which results from the stresses exerted on the seat (14) and which is exerted at the interface between the cradle (36) of the connecting shoe (35) and the ramp (34) of the pusher (33), is kept confined inside the friction cone of said interface.

8. Drum according to one of the preceding claims, **characterized in that** the clamping jaws (12) are provided, on their radially outer faces, with a circumferential housing (15), preferably in the form of a V-shaped slot, which defines the seat (14) for receiving the bead wire (3).

9. Drum according to Claim 8, **characterized in that** it comprises a banding strip (16), made of elastomer material, which forms a continuous annular band that is closed about the central axis (Z1), which fits in the circumferential housing (15) of the clamping jaws (12), and which is designed so as to exhibit an annular groove (17) forming the seat (14) for receiving the bead wire (3).

10. Drum according to one of the preceding claims, **characterized in that** the first arm (27) and/or the second arm (28) of the articulated parallelogram comprise(s) at least two side members (51, 52) which each connect together the two pivots (21, 23) connected by the arm (27) in question, said side members (51, 52) being held together by one or more crosspieces (53).

11. Drum according to one of the preceding claims, **characterized in that** it comprises a first shaft (11_1) and a second shaft (11_2) which are mounted so as to move in translation along the central axis (Z1) and are each provided with an expandable seat (14_1, 14_2), such that it is possible to shape the pneumatic tyre (2) by clamping a first bead wire (3_1) on the expandable seat (14_1) of the first shaft (11_1) and a second bead wire (3_2) on the expandable seat (14_2) of the second shaft (11_2) and then by moving the two shafts (11_1, 11_2) axially towards one another so as to move the two bead wires (3_1, 3_2) carried by said shafts axially towards one another.
